# EUROPEAN PATENT SPECIFICATION

(11) **EP 4 274 159 B1**
(45) Date of publication and mention of the grant of the patent: **09.10.2024**
(21) Application number: 22183574.7
(22) Date of filing: 07.07.2022
(51) Int. Cl.: H04L 9/40, H04L 9/00, G06Q 20/36, E04H 1/12, G06Q 10/02, G06Q 20/12, G06Q 20/14, G06Q 30/0241, G06Q 30/06

(54) **CLOUD-BASED CYBER TRADE SHOW SYSTEM**
CLOUD-BASIERTES CYBER-HANDELSMESSESYSTEM
SYSTÈME DE CYBER-SALON PROFESSIONNEL EN NUAGE

(30) Priority: 04.05.2022 TW 111116840
(43) Date of publication of application: 08.11.2023
(73) Proprietor: NAN YA PLASTICS CORPORATION, Taipei (TW)
(72) Inventor: LIN, Fong-Chin, 105 Taipei City (TW)
(74) Representative: Viering, Jentschura & Partner mbB Patent- und Rechtsanwälte

(56) References cited:
- KR-A- 20200 137 866
- US-A1- 2003 156 135
- ANONYMOUS: "WELCOME TO CYBER HITEC LET'S TAKE THE NEXT STEP INTO THE FUTURE, TOGETHER Virtual Exhibitor Guide", 1 October 2020 (2020-10-01), pages 1 - 69, XP093010146, Retrieved from the Internet <URL:https://www.hftp.org/hitec/north_America/i/downloads/CYH20_Virtual_Exhibitor_Guide.pdf> [retrieved on 20221221]
- ANONYMOUS: "White Paper on Blockchain in Trade Facilitation White Paper on Blockchain in Trade Facilitation", 1 September 2020 (2020-09-01), pages 1 - 159, XP093010297, ISBN: 978-92-1-005254-2, Retrieved from the Internet <URL:https://unece.org/DAM/trade/Publications/ECE-TRADE-457E_WPBlockchainTF.pdf> [retrieved on 20221221]

## Description

### CROSS-REFERENCE TO RELATED PATENT APPLICATION

This application claims the benefit of priority to Taiwan Patent Application No. 111116840, filed on May 4, 2022.

### FIELD OF THE DISCLOSURE

The present disclosure relates to a cloud-based cyber trade show system, and more particularly to a cloud-based cyber trade show system that is operated on a blockchain.

### BACKGROUND OF THE DISCLOSURE

With the rapid spread of the pandemic in recent years, various trade shows (e.g., consumer electronics shows, tool shows, furniture shows, and interior decoration shows) in many countries have been forced to cancel, and manufacturers are unable to directly contact relevant buyers through the trade shows. As a result, the manufacturers directly or indirectly lose numerous order placement opportunities. On the other hand, the relevant buyers are unable to learn the latest technologies from the manufacturers all at one time through the trade shows, so that a large amount of time needs to be spent on obtaining information about the latest technologies of each of the manufacturers through other means.

Before the pandemic, the manufacturers strive to participate in various trade shows held around the world, so as to reach out to buyers from different countries. In order to effectively exhibit brand or product characteristics, not only are arrangements made for the relevant products and personnel to be present at the trade shows in a timely manner, but booths at an exhibition venue are also specifically designed. Each year, the manufacturers need to spend a lot of manpower, material resources, and money in this regard.

In practice, even though the manufacturers spend a lot of manpower, material resources, and thoughts on planning, preparing, and designing the booths at the exhibition venue, many natural factors still cannot be overcome. For example, flight delays caused by natural disasters can result in the failure of the relevant personnel (and even products) to timely arrive at the exhibition venue, thereby causing a considerable amount of waste.

On the other hand, companies of the buyers also invest a lot of time, money and manpower to ensure that relevant procuring personnel arrive on time at the exhibition venue of the trade show. Likewise, in practice, the relevant procuring personnel may encounter impossible natural factors and are unable to show up at the exhibition venue of the trade show in a timely manner.

In addition, in existing large-scale trade shows, organizers mainly provide services of venue rental and ticket sales, and do not participate in the procurement arrangements between vendors and buyers. Furthermore, the organizers basically do not conduct strict identity verification against exhibition vendors or ticket purchasers, and some trade shows even allow free entry for visitors. Therefore, in practice, when any procurement disputes arise between the vendors and the buyers, either party can hardly seek compensation. Moreover, in the case of large-scale trade shows around the world, the vendors and the buyers present at the same trade show may come from different countries, and procurement disputes that involve vendors and buyers of different countries are not likely to be resolved in an effective manner.

In addition, in the existing trade shows, an issue in which procurement payment and merchandises agreed upon between the buyer and the vendor at the booth are different from payment requested by the vendor and merchandises provided thereby at a later time is also likely to occur. Solving such a problem can be challenging, especially when the head office of the vendor and the buyer are located in different countries.

In some extreme cases, the vendor at the trade show may accept a deposit from the buyer and sign a procurement contract with the buyer, but makes off with the deposit after the trade show. For the organizers of various trade shows, this situation is also a problem that cannot be effectively avoided.

In the existing trade shows, the vendor may fail to pay remaining balance payments to the organizer on time after the exhibition. If the vendor and the organizer are in different countries, it is difficult for the organizer to receive the payment.

Accordingly, the organizers, the vendors, and the buyers all need to invest large amounts of manpower, material resources, and money in the existing large-scale trade shows around the world. Furthermore, it is not possible to effectively resolve contract disputes that occur between the organizers, the vendors, and the buyers

The prior art document "CYBER HITEC: Virtual Exhibitor Guide" presented by Hospitality Financial and Technology Professionals (HFTP) discloses all available details related to the set- up and management of a CYBER HITEC virtual booth.

### SUMMARY OF THE DISCLOSURE

In response to the above-referenced technical inadequacies, the present
invention is defined by the appended claims. Its disclosure provides a cloud-based cyber trade show system, so as to improve upon problems that are present in a conventional physical trade show.

In one aspect, the present disclosure provides a cloud-based cyber trade show system operated on a blockchain. The cloud-based cyber trade show system includes a visitor decentralized application and a vendor decentralized application. The visitor decentralized application displays at least one virtual reality exhibition venue, and the virtual reality exhibition venue presents a plurality of booths in a virtual reality. The vendor decentralized application allows an exhibition vendor to log in. The vendor decentralized application includes an exhibition venue interface and a listing interface. The exhibition venue interface presents a plurality of exhibition options. Each of the exhibition options corresponds to one of the booths in the virtual reality exhibition venue, and each of the booths includes a booth number that is unique. The listing interface is presented when any of the exhibition options is selected. When the listing interface is presented, booth information is displayed, and the exhibition vendor is allowed to input at least one piece of exhibit data and a vendor wallet address, so as to establish an exhibition smart contract. The exhibition smart contract includes a starting procedure, exhibition information, an exhibition data verification procedure, a listing transfer procedure, an exhibition transfer procedure, a random inspection procedure, and a balance payment transfer procedure. When the exhibition smart contract is established, the starting procedure transfers a listing fee from the vendor wallet address to a public wallet address, and transfers a listing deposit and an operation deposit from an operation wallet address of a venue operator to the public wallet address. The exhibition information includes a contract establishing date, a start date, an end date, the exhibit data, a verification date, the vendor wallet address, the booth information, the listing fee, vendor data, the public wallet address, the operation wallet address, and the listing deposit. The booth information includes the booth number and a booth image. The exhibition data verification procedure is called to verify whether or not the exhibit data are exhibited at the booth number of the virtual reality exhibition venue, and to correspondingly generate verification information. The listing transfer procedure is used to call the exhibition data verification procedure on the verification date for obtaining the verification information. When the listing transfer procedure determines, according to the verification information, that the exhibit data are exhibited at one of the booths that corresponds to the booth number, the listing transfer procedure transfers the listing fee from the public wallet address to the operation wallet address, transfers the listing deposit from the public wallet address to the operation wallet address, and transfers an exhibition fee from the vendor wallet address to the public wallet address. When the listing transfer procedure determines, according to the verification information, that the exhibit data are not exhibited at the one of the booths that corresponds to the booth number, the listing transfer procedure transfers the listing fee from the public wallet address to the vendor wallet address, and transfers the listing deposit from the public wallet address to the vendor wallet address. The exhibition transfer procedure is used to call the exhibition data verification procedure on the start date for obtaining the verification information. When the exhibition transfer procedure determines, according to the verification information, that the exhibit data are exhibited at one of the booths that corresponds to the booth number, the exhibition transfer procedure transfers an exhibition front payment from the public wallet address to the operation wallet address. When the exhibition transfer procedure determines, according to the verification information, that the exhibit data are not exhibited at the one of the booths that corresponds to the booth number, the exhibition transfer procedure transfers the exhibition fee from the public wallet address to the vendor wallet address, and transfers the listing deposit from the public wallet address to the vendor wallet address. The random inspection procedure is used to randomly call the exhibition data verification procedure at least once each day between the start date and the end date for obtaining the verification information, and to store the verification information as random inspection result information. The balance payment transfer procedure is used to transfer, according to the random inspection result information, a predetermined percentage of an exhibition balance payment from the public wallet address to the operation wallet address after the end date, and to close the exhibition smart contract. The predetermined percentage ranges from 0% to 100%, and a sum of the exhibition front payment and the exhibition balance payment equals to the exhibition fee. When the balance payment transfer procedure determines, according to the random inspection result information, that the verification information obtained by the random inspection procedure each time indicates that the exhibit data are exhibited at one of the booths that corresponds to the booth number, and the predetermined percentage is 100%. When the balance payment transfer procedure determines, according to the random inspection result information, that the verification information obtained by the random inspection procedure each time indicates that the exhibit data are not exhibited at one of the booths that corresponds to the booth number, the predetermined percentage is 0%, and the balance payment transfer procedure transfers the exhibition fee from the public wallet address to the vendor wallet address, and transfers the operation deposit from the public wallet address to the vendor wallet address.

Therefore, in the cloud-based cyber trade show system provided by the present disclosure, through the design of the vendor decentralized application and the exhibition smart contract, relevant vendors can display exhibits in the virtual reality exhibition venue. In addition, the exhibition smart contract automatically carries out inspection of the exhibit data, and automatically carries out billing and transfer of relevant payments, thereby effectively avoiding problems such as payment disputes. Furthermore, the cloud-based cyber trade show system of the present disclosure allows visitors to visit a trade show anytime and anywhere in a virtual reality manner by use of the visitor decentralized application. In this way, all costs can be significantly reduced.

These and other aspects of the present disclosure will become apparent from the following description of the embodiment taken in conjunction with the following drawings and their captions, although variations and modifications therein may be affected without departing from the scope of the novel concepts of the disclosure.

### BRIEF DESCRIPTION OF THE DRAWINGS

The described embodiments may be better understood by reference to the following description and the accompanying drawings, in which:
FIG. 1 is a block diagram of a cloud-based cyber trade show system according to the present disclosure;
FIG. 2 is a schematic diagram of a virtual reality exhibition venue displayed by a visitor decentralized application of the cloud-based cyber trade show system according to the present disclosure;
FIG. 3 and FIG. 4 are two screens of a ticketing interface of the visitor decentralized application of the cloud-based cyber trade show system according to the present disclosure;
FIG. 5 is a block diagram of the visitor decentralized application of the cloud-based cyber trade show system according to the present disclosure;
FIG. 6 is a schematic diagram of a path recording interface of the visitor decentralized application of the cloud-based cyber trade show system according to the present disclosure;
FIG. 7 is a schematic diagram of an exhibition venue interface of a vendor decentralized application of the cloud-based cyber trade show system according to the present disclosure;
FIG. 8 is a schematic diagram of a listing interface of the vendor decentralized application of the cloud-based cyber trade show system according to the present disclosure;
FIG. 9 is a virtual reality booth screen displayed on the listing interface of the vendor decentralized application of the cloud-based cyber trade show system according to the present disclosure;
FIG. 10 is a block diagram of an exhibition smart contract of the vendor decentralized application of the cloud-based cyber trade show system according to the present disclosure;
FIG. 11 is a schematic diagram showing an advertisement being displayed at a stage space of the virtual reality exhibition venue of the cloud-based cyber trade show system according to the present disclosure;
FIG. 12 is another schematic diagram of the listing interface of the vendor decentralized application of the cloud-based cyber trade show system according to the present disclosure;
FIG. 13 is a schematic diagram of an advertisement interface of the vendor decentralized application of the cloud-based cyber trade show system according to the present disclosure;
FIG. 14 is a block diagram of a timed advertisement smart contract of the vendor decentralized application of the cloud-based cyber trade show system according to the present disclosure;
FIG. 15 is a schematic diagram showing another configuration of the advertisement interface of the vendor decentralized application of the cloud-based cyber trade show system according to the present disclosure;
FIG. 16 is a block diagram of a traffic advertisement smart contract;
FIG. 17 is a schematic diagram of a management interface of the vendor decentralized application of the cloud-based cyber trade show system according to the present disclosure;
FIG. 18 is a schematic diagram showing one configuration of the virtual reality exhibition venue of the visitor decentralized application of the cloud-based cyber trade show system according to the present disclosure;
FIG. 19 is a schematic diagram of an order interface of the visitor decentralized application of the cloud-based cyber trade show system according to the present disclosure;
FIG. 20 is another block diagram of the cloud-based cyber trade show system according to the present disclosure; and
FIG. 21 is a schematic diagram showing one variation of a vendor management interface of the vendor decentralized application of the cloud-based cyber trade show system according to the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

In the following description, if it is indicated that "reference is made to a specific drawing" or "as shown in a specific drawing", this is only to emphasize that in the description that follows, most content related thereto is depicted in said specific drawing. However, the description that follows should not be construed as being limited to said specific drawing only. It should be noted that a cloud-based cyber trade show system of the present disclosure is mainly achieved by using the existing blockchain technology that can execute smart contracts, and the underlying technology of the blockchain and the smart contracts is not described in detail in the following description.

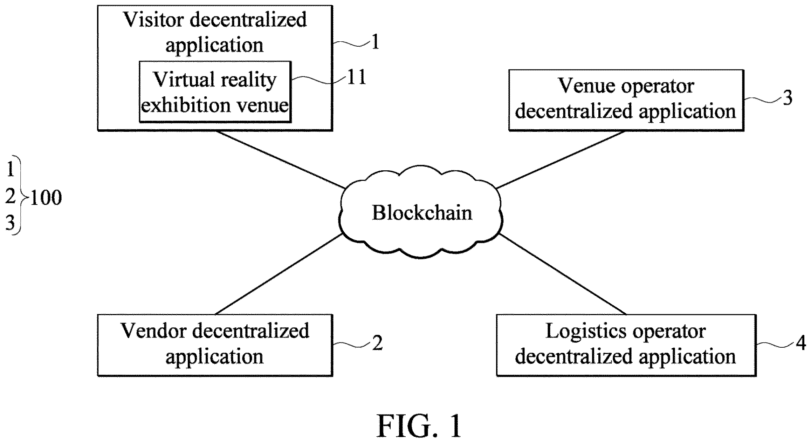

Reference is made to FIG. 1, which is a block diagram of the cloud-based cyber trade show system of the present disclosure. A cloud-based cyber trade show system 100 of the present disclosure is operated on a blockchain. The cloud-based cyber trade show system 100 includes a visitor decentralized application 1, a vendor decentralized application 2, a venue operator decentralized application 3, and a logistics operator decentralized application 4. It should be noted that the cloud-based cyber trade show system 100 is operated on a blockchain that can execute smart contracts (such as Ethereum, Hyperledger, and R3 Corda). The cloud-based cyber trade show system 100 can be operated on a public chain, a private chain or a consortium blockchain according to practical requirements, and there is no restriction in this regard.

In practical application, through the venue operator decentralized application 3, a venue operator that organizes various trade shows can set a start date, an end date, a venue size, a venue layout, an exhibition fee, a listing fee, a ticket fee, and the like for each virtual reality exhibition venue. The venue operator can be a developer of the cloud-based cyber trade show system, and the visitor decentralized application 1, the vendor decentralized application 2, the venue operator decentralized application 3 and the logistics operator decentralized application 4 are all developed by the venue operator.

The visitor decentralized application 1, the vendor decentralized application 2, the venue operator decentralized application 3, and the logistics operator decentralized application 4 are decentralized applications (Dapp) operated on the blockchain. In one specific embodiment, the cloud-based cyber trade show system 100 of the present disclosure may be operated on Ethereum, and the visitor decentralized application 1, the vendor decentralized application 2, the venue operator decentralized application 3, and the logistics operator decentralized application 4 are decentralized applications developed by using the web3.JS technology. Further, the visitor decentralized application 1, the vendor decentralized application 2, the venue operator decentralized application 3, and the logistics operator decentralized application 4 are operated on browsers that support Dapp. For example, users can operate the decentralized applications by using software on smartphones (e.g., Toshi and Status), or by using software on laptop computers (e.g., Mist and Parity).

The visitor decentralized application 1 can display at least one virtual reality exhibition venue 11, and the virtual reality exhibition venue 11 presents a plurality of booths 111 in a virtual reality manner. The virtual reality exhibition venue 11 can be a fully virtualized scene, or can be a virtual scene created by shooting a physical exhibition venue in a panoramic format, but is not limited thereto. In practice, the virtual reality exhibition venue 11 can be presented in AR (augmented reality), VR (virtual reality), MR (mixed reality), etc., but is not limited thereto.

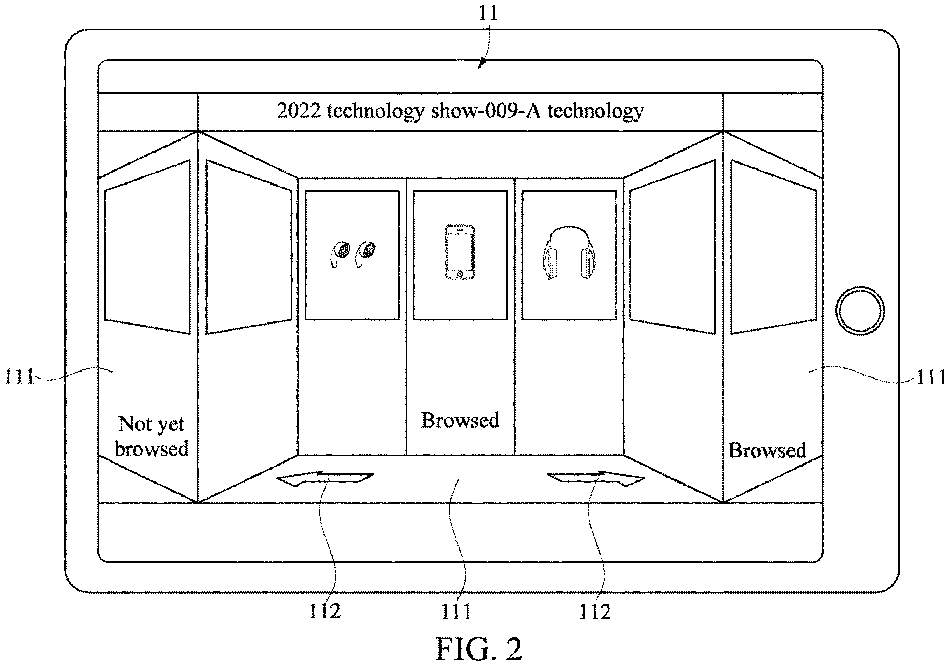

Reference is made to FIG. 1 and FIG. 2. FIG. 2 is a schematic diagram of a virtual reality exhibition venue that is shown when a user uses a tablet computer to execute a visitor decentralized application. In the virtual reality exhibition venue 11 presented by the visitor decentralized application 1, the user may, for example, see the booths 111 and a plurality of navigation options 112. The user may switch a screen currently displayed by the visitor decentralized application 1 by selecting the navigation options 112. In this way, the user can obtain an experience that is substantially similar to that of visiting a physical exhibition. Specific configurations of the booths 111 of the virtual reality exhibition 11 are not limited to those shown in the drawing.

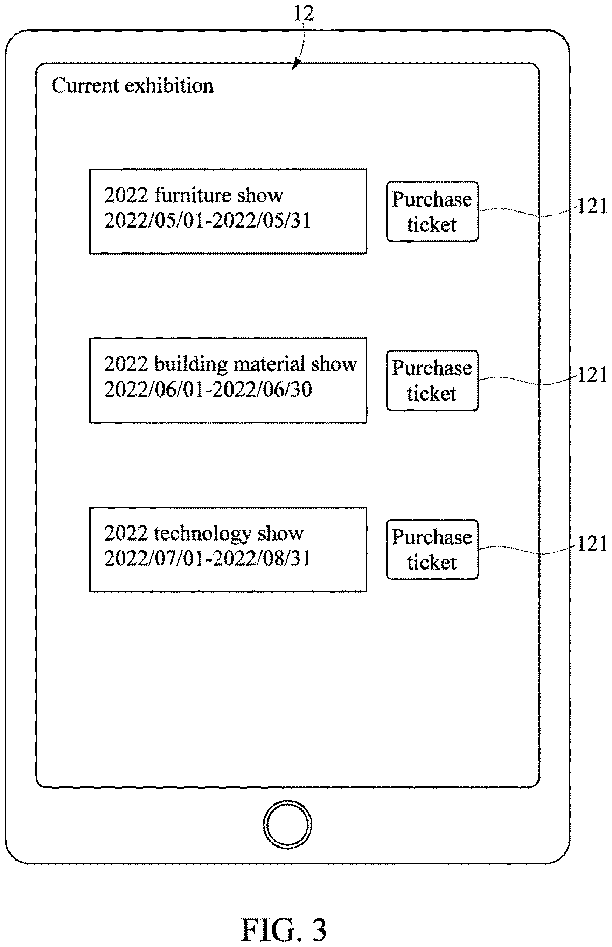

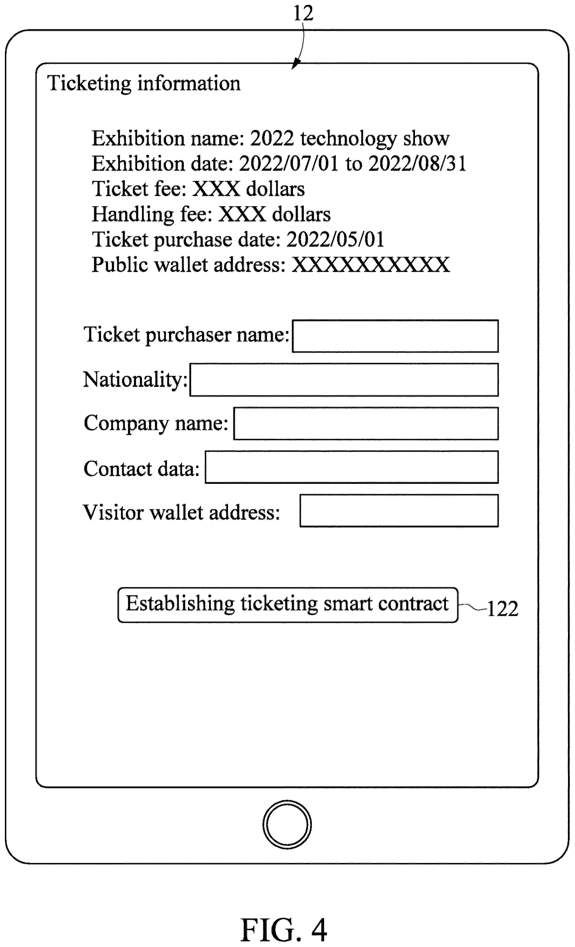

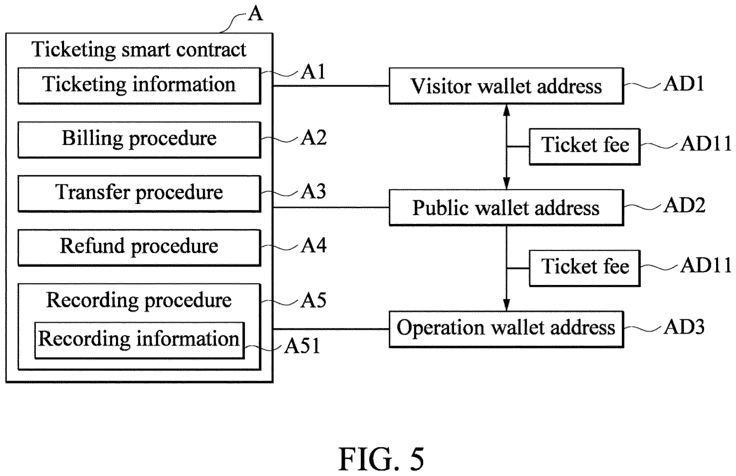

Referring to FIG. 1 and FIG. 3 to FIG. 5, FIG. 3 and FIG. 4 are two screens of a ticketing interface of the visitor decentralized application of the cloud-based cyber trade show system of the present disclosure, and FIG. 5 is a block diagram of the visitor decentralized application of the cloud-based cyber trade show system of the present disclosure. In practice, the visitor decentralized application 1 further includes a ticketing interface 12 (as shown in FIG. 3). One of starting screens of the ticketing interface 12 displays a plurality of ticketing options 121, and each of the ticketing options 121 corresponds to the virtual reality exhibition venue currently displayed. When one of the ticketing options 121 is selected, the ticketing interface 12 may be transformed from the screen shown in FIG. 3 to the screen shown in FIG. 4, and the ticketing interface 12 requires a visitor to input a visitor wallet address and a visitor information, so as to establish a ticketing smart contract A. The visitor information may include, for example, a nationality, a gender, an age, a company name, the name of the visitor, and contact information, but is not limited thereto. In practice, in the screen of the ticketing interface 12 shown in FIG. 4, the ticketing interface 12 also includes a ticketing smart contract generation option 122. After the visitor inputs the visitor wallet address and the visitor information, the user can select the ticketing smart contract generation option 122 to establish the ticketing smart contract A.

As shown in FIG. 5, the ticketing smart contract A may include a ticketing information A1, a billing procedure A2, a transfer procedure A3, a refund procedure A4, and a recording procedure A5. The ticketing information A1 may include virtual exhibition venue information, a ticket purchase date, the visitor wallet address, a ticket fee, a public wallet address, and an operation wallet address. The virtual exhibition venue information may include the start date of the virtual reality exhibition venue, the end date of the virtual reality exhibition venue, and exhibition venue identification data. The exhibition venue identification information is mainly used to display a virtual reality venue ticket purchased by the visitor. For example, the exhibition venue identification information may be the name of an exhibition venue (e.g., 2022 technology show), an exhibition venue number, etc.

Furthermore, when the ticketing smart contract A is established, the billing procedure A2 is executed and transfers a ticket fee AD 11 from a visitor wallet address AD1 to a public wallet address AD2. When the visitor enters the virtual reality venue that corresponds to the virtual venue information in the ticketing information A1, the transfer procedure A3 transfers the ticket fee AD 11 from the public wallet address AD2 to an operation wallet address AD3. The refund procedure A4 is automatically executed on the end date to determine whether or not the visitor enters the virtual reality exhibition venue before the end date. If the refund procedure A4 determines that the visitor does not enter the virtual reality exhibition venue before the end date, the refund procedure A4 transfers the ticket fee AD 11 from the public wallet address AD2 to the visitor wallet address AD1. It should be noted that, in practice, the refund procedure A4 is not limited to the above description as to how much of the ticket fee AD11 is transferred from the public wallet address AD2 to the visitor wallet address AD 1. In different embodiments, the refund procedure A4 may transfer a handling fee from the public wallet address AD2 to the operation wallet address AD3, and transfer the remaining amount of the ticket fee AD 11 (after deducting the handling fee) to the visitor wallet address AD1.

As described above, through the billing procedure A2, the transfer procedure A3, and the refund procedure A4, when the visitor purchases a ticket for a virtual reality exhibition venue but forgets to browse the virtual reality exhibition venue within an exhibition period, the visitor automatically receives a refund. Conversely, in a conventional physical trade show, the visitor must pay in advance for the ticket. After purchasing the ticket, if the visitor does not visit the exhibition venue during the exhibition period, the visitor does not receive any refund.

Each time the visitor enters the virtual reality exhibition venue, the recording procedure A5 records a movement path of the visitor and a dwell time of the visitor at each of the booths in the virtual reality exhibition venue until the visitor leaves the virtual reality exhibition venue, and the recording procedure A5 correspondingly generates recording information A5 1.

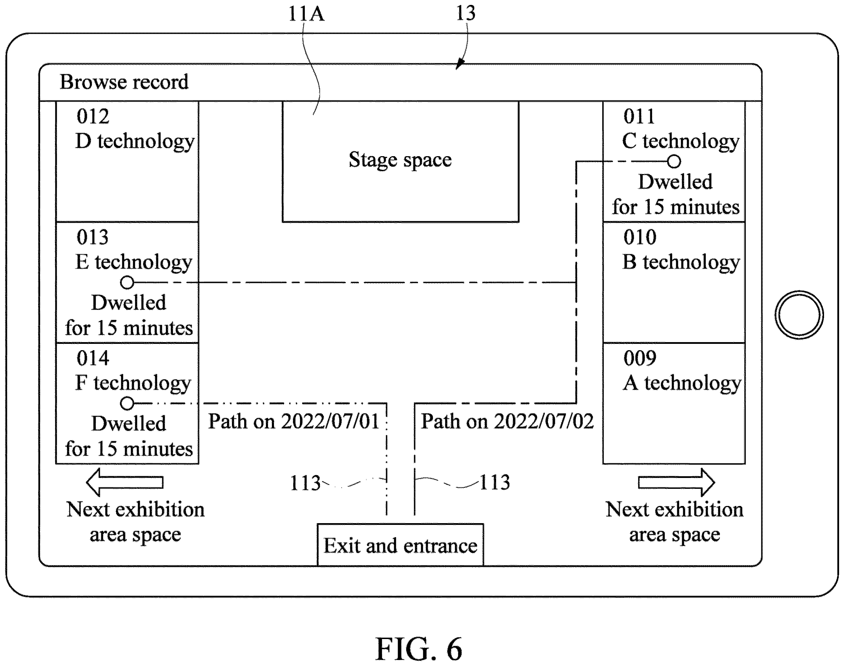

Reference is made to FIG. 5 and FIG. 6. FIG. 6 is a schematic diagram of a path recording interface of the visitor decentralized application of the cloud-based cyber trade show system of the present disclosure. The visitor decentralized application 1 further includes a path recording interface 13 that calls the recording procedure A5 to obtain the recording information A5 1. The visitor decentralized application 1 displays at least one browsing path 113 of the visitor in the virtual reality exhibition venue and the dwell time at each of the browsed booths based on the recording information A5 1.

Through the recording procedure A5, the path recording interface 13, etc., the visitor can know which booths have been visited and which booths have not been visited during a previous log-in session. More specifically, since the visitor can visit the virtual reality exhibition venue that corresponds to the ticket purchased by the visitor anytime and anywhere through the visitor decentralized application 1, if the visitor visits the virtual reality exhibition venue in his/her spare time, the visitor can easily forget which booths have been visited the next time the visitor logs in. The visitor can then use the path recording interface 13 to learn the status of previous visits.

Reference is made to FIG. 2 and FIG. 6. When the visitor logs in the virtual reality exhibition venue 11 for a second time or more times, the booths that are browsed are marked in the virtual reality exhibition venue 11 according to the recording information A51. That is to say, when the visitor logs in the virtual reality exhibition venue 11 for a second time or more times, the visitor may directly view markings in the virtual reality exhibition venue 11 (e.g., the browsed and the not-yet-browsed as shown in FIG. 2), and learn which of the booths are browsed and which of those are not yet browsed.

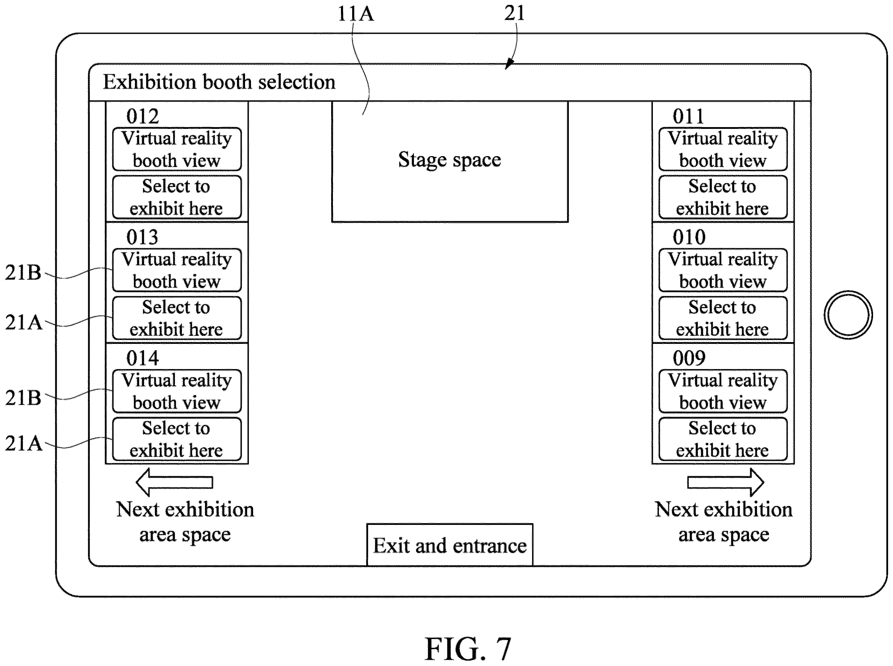

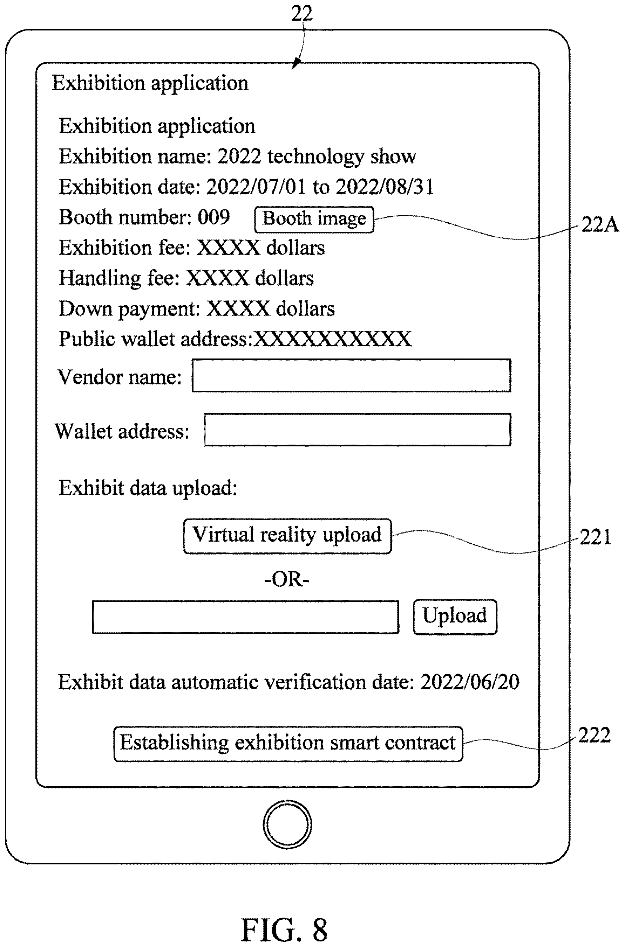

Reference is made to FIG. 1, FIG. 7 and FIG. 8. FIG. 7 is a schematic diagram of an exhibition venue interface of a vendor decentralized application of the cloud-based cyber trade show system of the present disclosure. FIG. 8 is a schematic diagram of a listing interface of the vendor decentralized application of the cloud-based cyber trade show system of the present disclosure. The vendor decentralized application 2 allows an exhibition vendor to log in, and the vendor decentralized application 2 includes an exhibition venue interface 21 and a listing interface 22. The exhibition venue interface 21 presents a plurality of exhibition options 21A, and each of the exhibition options 21A corresponds to one of the booths in the virtual reality exhibition venue. Each of the booths includes a booth number that is unique. For example, as shown in FIG. 7, when the exhibition vendor executes the exhibition venue interface 21 of the vendor decentralized application 2 by using a tablet computer, the exhibition vendor may, for example, view a floor plan of the exhibition venue. The floor plan includes the booth number of each of the booths, the exhibition option 21A for each of the booths, and a booth view option 21B. The exhibition vendor may, for example, decide to exhibit at one of the booths by directly selecting any of the exhibition options 21A in FIG. 7. Or, the exhibition vendor may select the booth view option 21B for any of the booths in FIG. 7 to switch to a screen showing a virtual reality view of the corresponding booth.

As shown in FIG. 1, FIG. 7, and FIG. 8, when one of the exhibition options 21A shown in FIG. 7 is selected by the exhibition vendor, the vendor decentralized application 2 presents the listing interface 22 shown in FIG. 8. The listing interface 22 displays booth information that corresponds to the exhibition option 21A selected by the exhibition vendor, and the booth information includes the booth number and a booth image. After the exhibition vendor confirms that the booth information is correct, the exhibition vendor can input at least one exhibit data and a vendor wallet address to the listing interface 22. In practical application, the listing interface 22 can, for example, include a booth image option 22A. The exhibition vendor can select the booth image option 22A, so that the listing interface 22 presents a corresponding virtual reality booth screen.

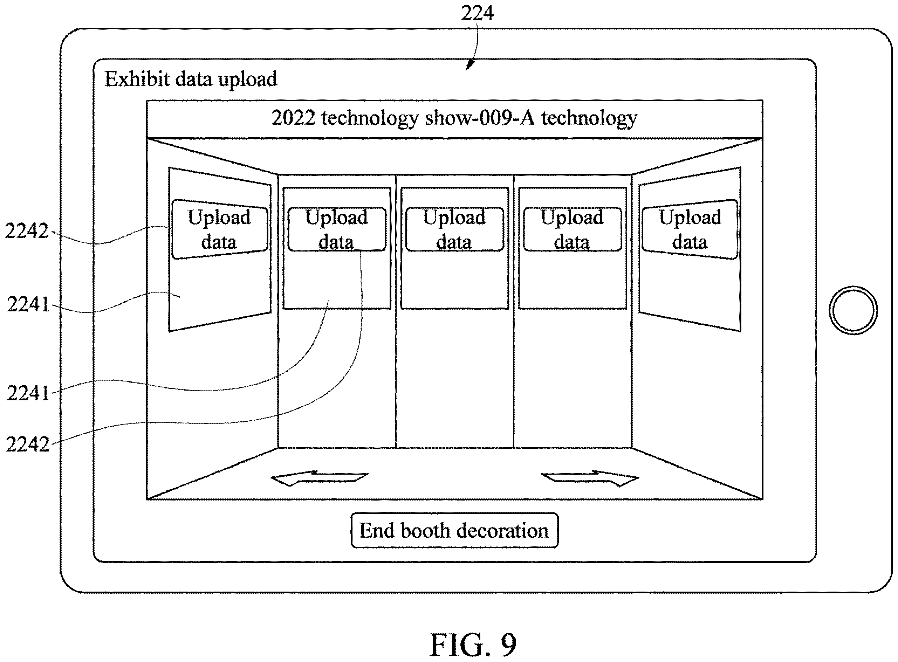

Reference is made to FIG. 8 and FIG. 9. FIG. 9 is a screen of a virtual reality booth screen displayed on the listing interface the vendor decentralized application of the cloud-based cyber trade show system of the present disclosure. In practice, the exhibition vendor can select a virtual reality data upload option 221 in the listing interface 22 shown in FIG. 8, so that the listing interface 22 displays a virtual reality booth screen 224 (as shown in FIG. 9) that corresponds to the booth number. The virtual reality booth screen 224 includes a plurality of exhibition positions 2241 and a plurality of exhibition position options 2242, each of the exhibition positions 2241 corresponds to one of the plurality of exhibition position options 2242, and the exhibition vendor can upload one piece of the exhibit data by selecting any of the exhibition position options 2242. When the exhibition vendor selects one of the exhibition position options 2242 and completes uploading the exhibit data, the exhibit data uploaded by the exhibition vendor is presented in real time at the exhibition position 2241.

Specifically, when the exhibition vendor selects one of the exhibition position options 2242, the listing interface 22 may, for example, display a pop-up window requesting the exhibition vendor to upload the exhibit data. The pop-up window will close when the exhibition vendor has finished uploading the exhibit data, and the corresponding exhibition position 2241 will display the exhibit data that the exhibition vendor has just uploaded.

When the exhibition vendor has completed inputting the data in the screen of the listing interface 22 shown in FIG. 8, the exhibition vendor can select an exhibition smart contract generation option 222 in the listing interface 22 to establish an exhibition smart contract. It should be noted that the screen practically presented on the listing interface 22 and the data required to be inputted by the exhibition vendor are not limited by the above descriptions and drawings, and can be modified according to requirements.

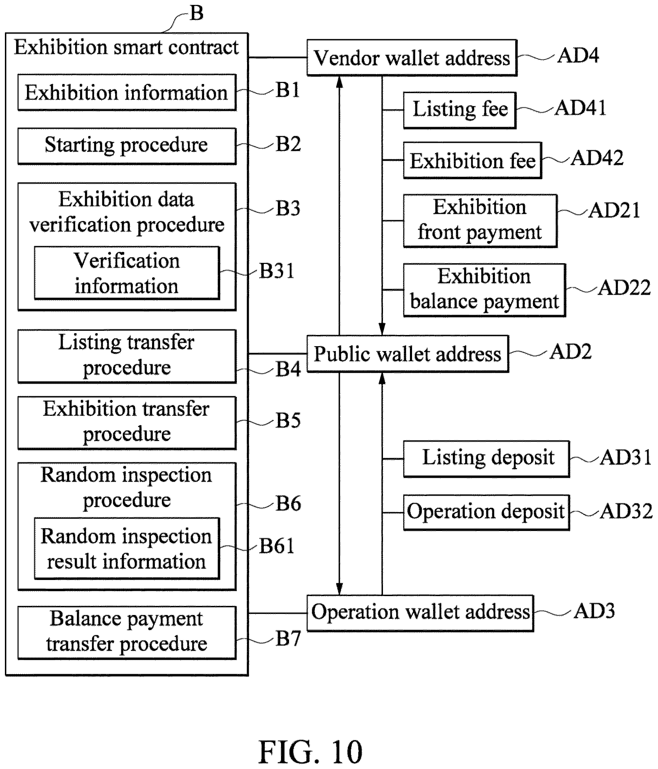

Reference is made to FIG. 8 and FIG. 10. FIG. 10 is a block diagram of an exhibition smart contract of the vendor decentralized application of the cloud-based cyber trade show system of the present disclosure. When the exhibition vendor has completed inputting the data requested by the listing interface 22, and selects the exhibition smart contract generation option 222, an exhibition smart contract B is established. The exhibition smart contract B may include exhibition information B 1, a starting procedure B2, an exhibition data verification procedure B3, a listing transfer procedure B4, an exhibition transfer procedure B5, a random inspection procedure B6, and a balance payment transfer procedure B7.

The exhibition information includes a contract establishing date, the start date of the virtual reality exhibition venue, the end date of the virtual reality exhibition venue, the exhibit data, a verification date, the vendor wallet address, the booth information, the listing fee, a vendor data, the public wallet address, the operation wallet address, and a listing deposit. The booth information includes the booth number and the booth image. For example, the booth image is a virtual reality image (presented in formats such as a video or a motion photo) of the booth that corresponds to the booth number. In other words, after the exhibition smart contract B is established, the information that the exhibition vendor inputs into and views in the listing interface 22 will be recorded in the exhibition information B 1 of the exhibition smart contract B. Any disputes, especially disputes over payment and dates, can be effectively avoided due to the characteristic that the blockchain cannot be easily tampered with.

When the exhibition smart contract is established, the starting procedure B2 transfers a listing fee AD41 from a vendor wallet address AD4 to the public wallet address AD2, and transfers a listing deposit AD31 and an operation deposit AD32 from the operation wallet address AD3 of the venue operator to the public wallet address AD2. In practice, if the starting procedure B2 cannot smoothly transfer the listing fee AD41 from the vendor wallet address AD4 to the public wallet address AD2, or smoothly transfer the listing deposit AD31 and the operation deposit AD32 from the operation wallet address AD3 to the public wallet address AD2, the starting procedure B2 may send corresponding notifications to the vendor decentralized application 2 and the venue operator decentralized application 3. According to responses of the vendor decentralized application 2 and the venue operator decentralized application 3, whether to execute the starting procedure B2 again or to directly end the exhibition smart contract B is determined.

The exhibition data verification procedure B3 can be called to verify whether or not the exhibit data are exhibited at the booth number of the virtual reality exhibition venue 11, and then correspondingly generate verification information B31. Reference is made to FIG. 9 again. In other words, the exhibit data uploaded by the exhibition vendor for each of the exhibition positions 2241 in the listing interface 22 will be recorded. When the exhibition data verification procedure B3 is called, the exhibition data verification procedure B3 verifies whether or not the corresponding exhibit data uploaded by the exhibition vendor are exhibited at each of the exhibition positions 2241 as shown in FIG. 9. There is no limitation on specific verification methods used by the exhibition data verification procedure B3. For example, the exhibition data verification procedure B3 may download the data of the exhibition positions 2241 and determine whether or not the exhibit data at each of the exhibition positions 2241 is correct by using the name of the data obtained by downloading.

The listing transfer procedure B4 is used to call the exhibition data verification procedure B3 on the verification date to obtain the verification information B31. When the listing transfer procedure B4 determines, according to the verification information B31, that the exhibit data are exhibited at the exhibition positions of one of the booths that corresponds to the booth number, the listing transfer procedure B4 transfers the listing fee AD41 from the public wallet address AD2 to the operation wallet address AD3, transfers the listing deposit AD31 from the public wallet address AD2 to the operation wallet address AD3, and transfers an exhibition fee AD42 from the vendor wallet address AD4 to the public wallet address AD2. Conversely, the listing transfer procedure B4 transfers the listing fee AD41 from the public wallet address AD2 to the vendor wallet address AD4, and transfers the listing deposit AD31 from the public wallet address AD2 to the vendor wallet address AD4.

In other words, the venue operator must correctly place the exhibit data provided by the exhibition vendor at the corresponding exhibition positions before the verification date; otherwise, the exhibition vendor will be compensated with the listing deposit paid by the venue operator and also retrieve the listing fee. On the contrary, if the venue operator makes arrangements so that the exhibit data specified by the exhibition vendor are correctly displayed at the exhibition positions designated by the exhibition vendor before the verification date, the venue operator will obtain the listing fee and the listing deposit.

The exhibition transfer procedure B5 is used to call the exhibition data verification procedure B3 on the start date to obtain the verification information B31. When the exhibition transfer procedure determines, according to the verification information B31, that the exhibit data are exhibited at one of the booths that corresponds to the booth number, the exhibition transfer procedure B5 transfers an exhibition front payment AD21 from the public wallet address AD2 to the operation wallet address AD3. Conversely, the exhibition transfer procedure B5 transfers the exhibition fee AD42 from the public wallet address AD2 to the vendor wallet address AD4, and transfers the listing deposit AD31 from the public wallet address AD2 to the vendor wallet address AD4.

The random inspection procedure B6 is used to randomly call the exhibition data verification procedure B3 at least once on each day between the start date and the end date to obtain the verification information B31, and store the verification information B31 as random inspection result information B61.

The balance payment transfer procedure B7 is used to transfer, according to the random inspection result information B61, a predetermined percentage of an exhibition balance payment AD22 from the public wallet address AD2 to the operation wallet address AD3 after the end date. The predetermined percentage ranges from 0% to 100%, and a sum of the exhibition front payment AD21 and the exhibition balance payment AD22 equals to the exhibition fee AD42.

For example, when the balance payment transfer procedure B7 determines, according to the random inspection result information B61, that the verification information B31 obtained by the random inspection procedure B6 each time indicates that the exhibit data are exhibited at one of the booths that corresponds to the booth number, the predetermined percentage is 100%. That is, the venue operator obtains the exhibition fee paid by the exhibition vendor. Conversely, when the balance payment transfer procedure B7 determines, according to the random inspection result information B61, that the verification information B31 obtained by the random inspection procedure B6 each time indicates that the booth number has not exhibited the exhibit data, the predetermined percentage is 0%. Then, the balance payment transfer procedure B7 transfers the exhibition fee AD42 from the public wallet address AD2 to the vendor wallet address AD4, and transfers the operation deposit AD32 from the public wallet address AD2 to the vendor wallet address AD4. That is, the exhibition vendor not only obtains the exhibition fee originally paid thereby, but also obtains the operation deposit paid in advance by the venue operator.

In other words, each day from the start date to the end date, the exhibition smart contract B determines whether or not the exhibit data are correctly displayed at the exhibition positions 2241 designated by the exhibition vendor in the virtual reality exhibition venue. Based on the determination result, the exhibition smart contract B decides a percentage of the exhibition balance payment AD22 that the exhibition vendor needs to pay in the end.

Accordingly, through the design of the exhibition transfer procedure B5, the random inspection procedure B6, and the balance payment transfer procedure B7, the venue operator will make an effort to maintain a normal operation of the virtual reality exhibition venue from the start date to the end date; otherwise, not only will the venue operator be unable to obtain the exhibition fee AD42, but the operation deposit AD32 paid in advance by the venue operator will also be paid to the exhibition vendor as compensation.

In practice, the virtual reality exhibition venue of the visitor decentralized application further includes a stage space, and the stage space is used to exhibit an advertisement. For example, as shown in FIG. 6, a stage space 11A of the virtual reality exhibition venue can also be displayed in the path recording interface 13. A position of the stage space 11A in the virtual reality exhibition venue can be changed according to practical requirements.

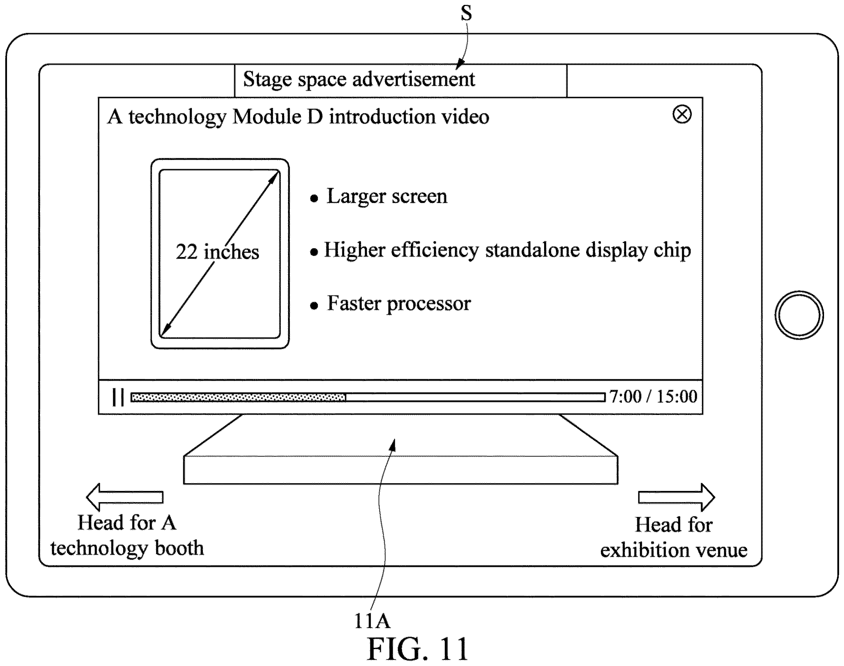

Reference is made to FIG. 11, which is a schematic diagram of an advertisement being shown at a stage space of the virtual reality exhibition venue of the cloud-based cyber trade show system of the present disclosure. Visitors in front of the stage space 11A of the virtual reality exhibition venue 11 can, for example, see an advertisement S (as a video) that is being played. Naturally, how the advertisement S is presented at the stage space 11A of the virtual reality exhibition venue 11 is not limited to being a video, and can be changed according to practical requirements. For example, the advertisement S can be presented as pictures, or can even be presented in the format of livestreaming.

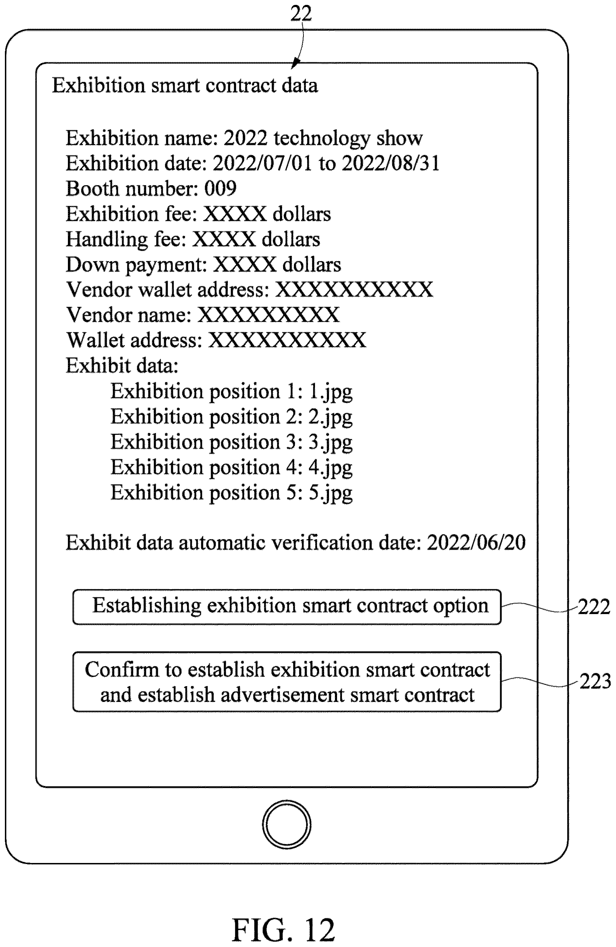

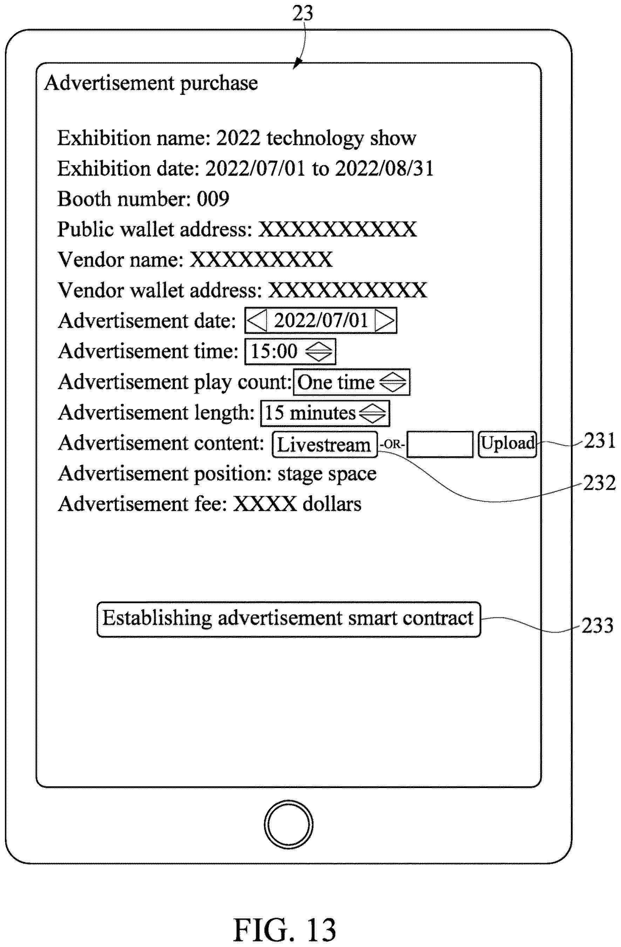

Reference is made to FIG. 8, FIG. 12, and FIG. 13. FIG. 12 is another schematic diagram of the listing interface of the vendor decentralized application of the cloud-based cyber trade show system of the present disclosure, and FIG. 13 is a schematic diagram of the advertisement interface of the vendor decentralized application of the cloud-based cyber trade show system of the present disclosure. In one embodiment, the listing interface 22 further includes an advertisement option, and when the advertisement option is selected, the listing interface 22 is converted into an advertisement interface 23. Specifically, after the exhibition vendor inputs relevant data into the listing interface 22 shown in FIG. 8, the exhibition vendor may select the exhibition smart contract generation option 222 displayed on the listing interface 22. Then, as shown in FIG. 12, the listing interface 22 may present all the relevant data input by the exhibition vendor for confirmation. At this time, the listing interface 22 may present the exhibition smart contract generation option 222 and an advertisement option 223. When the exhibition vendor selects the advertisement option 223, the exhibition smart contract will be established, and the listing interface 22 is converted into the advertisement interface 23 (as shown in FIG. 13).

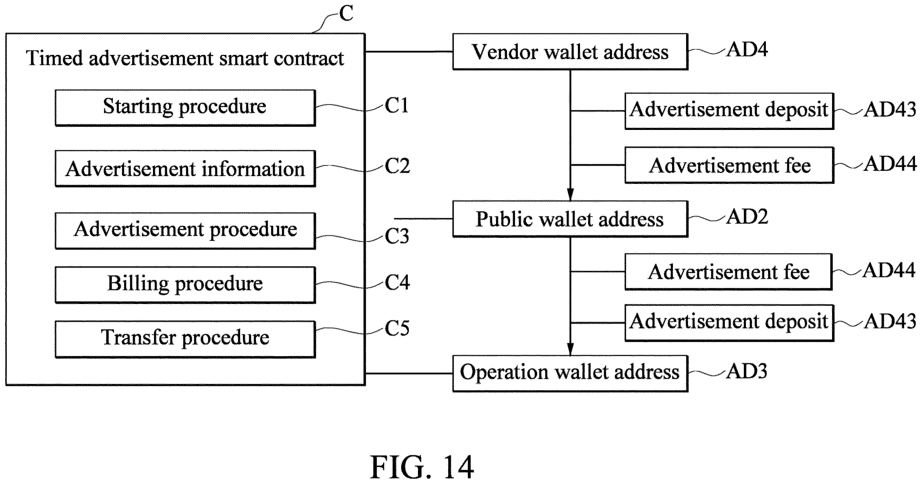

Reference is made to FIG. 13 and FIG. 14, and FIG. 14 is a block diagram of a timed advertisement smart contract. The advertisement interface 23 allows the exhibition vendor to input at least one advertisement date, at least one advertisement time, an advertisement play count, an advertisement length, an advertisement content, and an advertisement position, and the advertisement interface 23 generates an advertisement fee corresponding to inputs of the exhibition vendor. The advertisement interface 23 further includes an advertisement smart contract generation option 233. After the advertisement smart contract generation option 233 is selected, data that are input into the advertisement interface 23 are used to establish a timed advertisement smart contract C. In practical application, how the advertisement interface 23 is presented and the data that the advertisement interface 23 requests to be input are not limited to those shown in the drawings.

As shown in FIG. 14, the timed advertisement smart contract C may include a starting procedure C1, advertisement information C2, an advertisement procedure C3, a billing procedure C4, and a transfer procedure C5. The advertisement information C2 may include the vendor data, the advertisement date, the advertisement time, the advertisement play count, the advertisement length, the advertisement content, the advertisement position, the advertisement fee, the vendor wallet address, the public wallet address, and the operation wallet address, but is not limited thereto. The advertisement information C2 is mainly used to record relevant data input by the exhibition vendor in the advertisement interface 23 (as shown in FIG. 13).

When the timed advertisement smart contract C is established, the starting procedure C1 transfers an advertisement deposit AD43 from the vendor wallet address AD4 to the public wallet address AD2. The advertisement procedure C3 is used to exhibit the advertisement content at the advertisement position at the advertisement time on the advertisement date for a duration of the advertisement length.

As shown in FIG. 11 and FIG. 14, for example, the advertisement position of the timed advertisement smart contract C is the stage space 11A (as shown in FIG. 11), and the advertisement content of the timed advertisement smart contract C is a video with a video length of 15 minutes. When the visitor sees the stage space 11A by using the visitor decentralized application 1, the visitor may see a screen as shown in FIG. 11, in which the screen presents the advertisement content of the timed advertisement smart contract C (e.g., an advertisement video).

Accordingly, the visitor not only visits the booth of each of the exhibition vendors by using the visitor decentralized application 1 in a virtual reality manner, but can also view an advertisement content provided by one of the exhibition vendors at the stage space 11A of the virtual reality exhibition venue 11, so as to obtain an experience that is substantially similar to that of visiting a physical trade show.

As shown in FIG. 14, the billing procedure C4 of the timed advertisement smart contract C is used to transfer a portion of an advertisement fee AD44 from the vendor wallet address AD4 to the public wallet address AD2 after each execution of the advertisement procedure C3. The billing procedure C4 is called by the advertisement procedure C3 each time after the advertisement content is exhibited. The transfer procedure C5 is used to transfer the advertisement fee AD44 from the public wallet address AD2 to the operation wallet address AD3 after the billing procedure C4 is executed for a number of times that equal to the advertisement play count or called by the advertisement procedure C3, and then to end the timed advertisement smart contract C.

When the advertisement procedure C3 is called and fails to exhibit the advertisement content at the advertisement position, the advertisement procedure C3 does not call the billing procedure C4, and the advertisement procedure C3 calls the transfer procedure C5. Furthermore, when any time the billing procedure C4 is executed, if a portion of the advertisement fee AD44 is not properly transferred from the vendor wallet address AD4 to the public wallet address AD2, the billing procedure C4 then transfers the advertisement deposit AD43 from the public wallet address AD2 to the operation wallet address AD3 and calls the transfer procedure C5.

Accordingly, through the design of the starting procedure C1, the advertisement information C2, the advertisement procedure C3, the billing procedure C4, and the transfer procedure C5 in the timed advertisement smart contract C, the exhibition vendor is billed only after the advertisement content is properly exhibited at the advertisement position; otherwise, the exhibition vendor is not billed. Furthermore, if the corresponding advertisement fee AD44 cannot be transferred out from the vendor wallet address AD4, the advertisement deposit AD43 can still be transferred to the operation wallet address AD3, so as to ensure that the venue operator receives the advertisement fee for each display of the advertisement.

As shown in FIG. 13 and FIG. 14, in practice, the advertisement interface 23 (as shown in FIG. 13) may include an advertisement content upload option 231 and a livestream option 232. When the livestream option 232 is selected and the timed advertisement smart contract C is established, the advertisement procedure C3 may enable a livestream connection function at the advertisement position on the advertisement date, and the exhibition vendor may use the vendor decentralized application 2 to perform livestream at the advertisement position. That is to say, when the advertisement procedure C3 enables the livestream connection function at the advertisement position, and the exhibition vendor uses the vendor decentralized application 2 to perform livestream, the visitor can use the visitor decentralized application 1 to see a livestream content of the exhibition vendor at the stage space 11A (as shown in FIG. 11) of the virtual reality exhibition venue 11. Therefore, the visitor obtains an experience that is substantially similar to that of visiting a physical trade show and seeing a stage promotion.

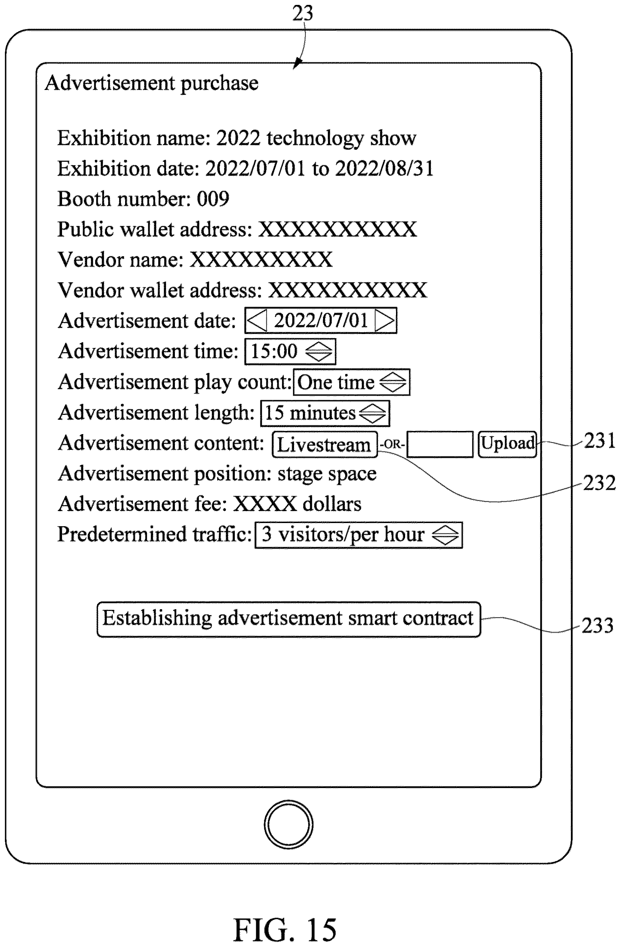

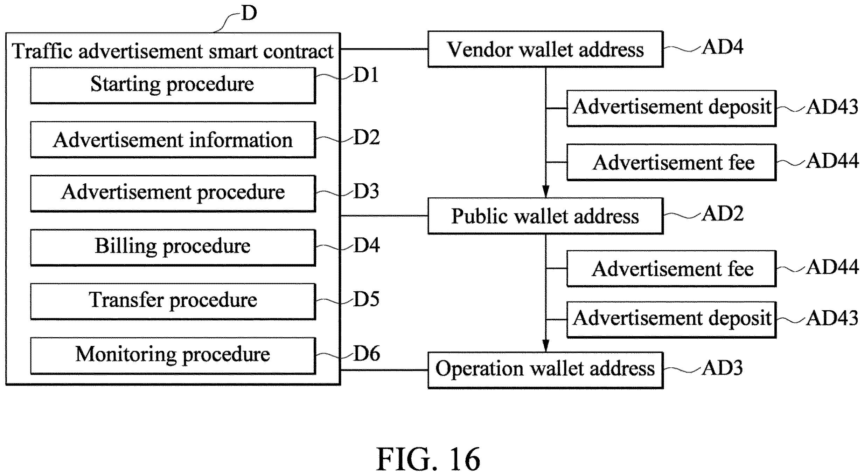

Referring to FIG. 15 and FIG. 16, FIG. 15 is a schematic diagram of another implementation of the advertisement interface of the vendor decentralized application of the cloud-based cyber trade show system of the present disclosure, and FIG. 16 is a block diagram of a traffic advertisement smart contract. In different embodiments, the advertisement interface 23 may require the exhibition vendor to input a predetermined traffic, so that the advertisement interface 23 establishes a traffic advertisement smart contract D.

The traffic advertisement smart contract D includes a starting procedure D1, advertisement information D2, an advertisement procedure D3, a billing procedure D4, a transfer procedure D5, and a monitoring procedure D6. When the traffic advertisement smart contract D is established, the starting procedure D1 transfers an advertisement deposit AD43 from the vendor wallet address AD4 to the public wallet address AD2. Regarding the advertisement information D2, the advertisement procedure D3, the billing procedure D4, and the transfer procedure D5, reference can be made to the descriptions of the aforementioned advertisement information C2, the advertisement procedure C3, the billing procedure C4, and the transfer procedure C5, and will not be reiterated herein. The monitoring procedure D6 is used to monitor a real-time browsing traffic of the booth. When the real-time browsing traffic is lower than the predetermined traffic and a number of times that the advertisement procedure D3 is called is not greater than the advertisement play count, the monitoring procedure D6 calls the advertisement procedure D3.

For example, if the predetermined traffic input by the exhibition vendor in the advertising interface 23 is 3 visitors per hour, the monitoring procedure D6 of the traffic advertisement smart contract D calls the advertisement procedure D3 when a real-time traffic of the booth is less than 3 visitors per hour, such that the advertisement procedure D3 displays the advertisement at specified advertisement positions.

Accordingly, through the design of the predetermined traffic and monitoring procedure, the advertisement is not shown at the advertisement position when the booth is browsed by many visitors. The advertisement is shown only when the traffic of the booth is relatively low, so that the advertisement can be better used to attract the visitors, and advertisement costs of the exhibition vendors can also be effectively saved.

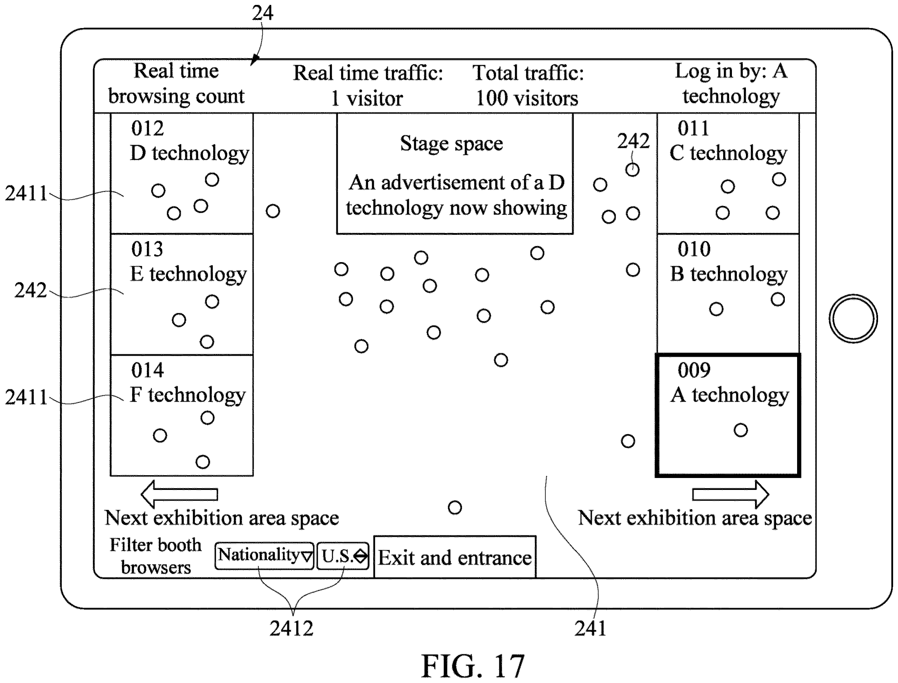

Reference is made to FIG. 17, which is a schematic diagram of a management interface of the vendor decentralized application of the cloud-based cyber trade show system of the present disclosure. In an exemplary embodiment, the vendor decentralized application 2 further includes a management interface 24, and the management interface 24 may display an exhibition venue floor plan 241 and a plurality of real-time visitor patterns 242. The exhibition venue floor plan 241 includes a plurality of booth patterns 2411, each of the booth patterns 2411 represents one of the booths in the virtual reality exhibition venue, and each of the real-time visitor patterns 242 represents a real-time position of the visitor currently in the virtual reality exhibition venue.

The management interface 24 further includes a filtering option 2412, and the filtering option 2412 can be operated to selectively hide a portion of the real-time visitor patterns 242 according to nationality, gender, or age. Categories that the filtering option 2412 may filter correspond to a part of the data of the visitor information that the ticketing interface 12 (as shown in FIG. 4) requires the visitor to input. That is to say, through the ticketing interface 12 (as shown in FIG. 4) requiring the visitor to input his/her nationality, gender, or age, the exhibition vendor is allowed to operate the management interface 24 and filter the real-time visitor patterns 242 that are present in the management interface 24 by the nationality, the gender, or the age.

For example, in the management interface 24 shown in FIG. 17, an exhibition vendor can learn that most of the visitors from the U.S. are watching an advertisement of a D technology company that is exhibited at a stage space. Further, the booth of the exhibition vendor (an A technology company) has a visitor inside the booth and another visitor outside the booth.

Through the design of the management interface 24, the exhibition vendor can learn a real-time browsing traffic of the booth thereof, and can also watch a real-time browsing traffic of other booths. Therefore, the exhibition vendor can learn what booth decoration attracts browsing from most visitors by observing the booth decoration of the booths that have a high traffic.

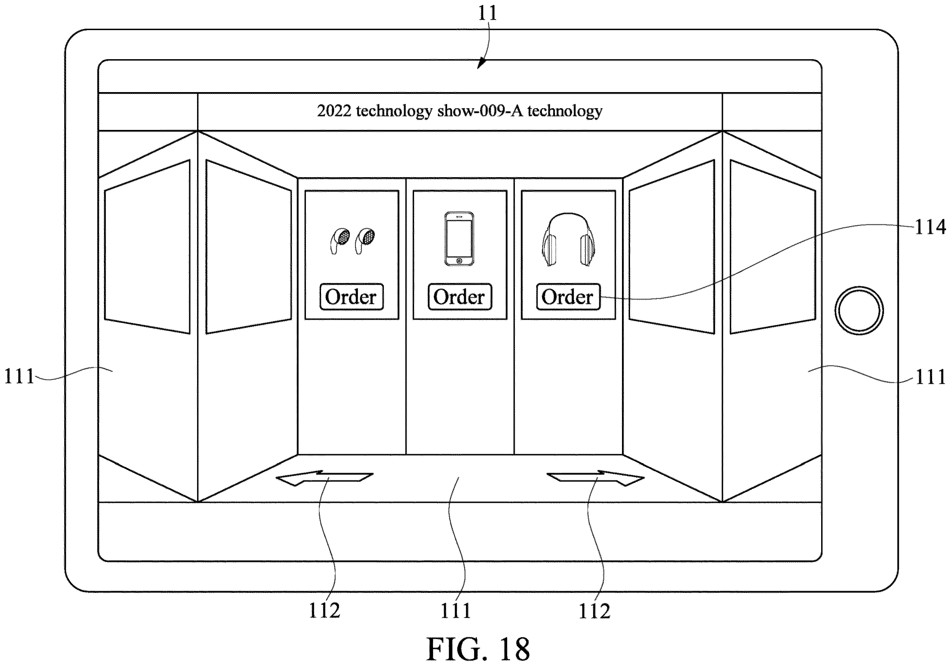

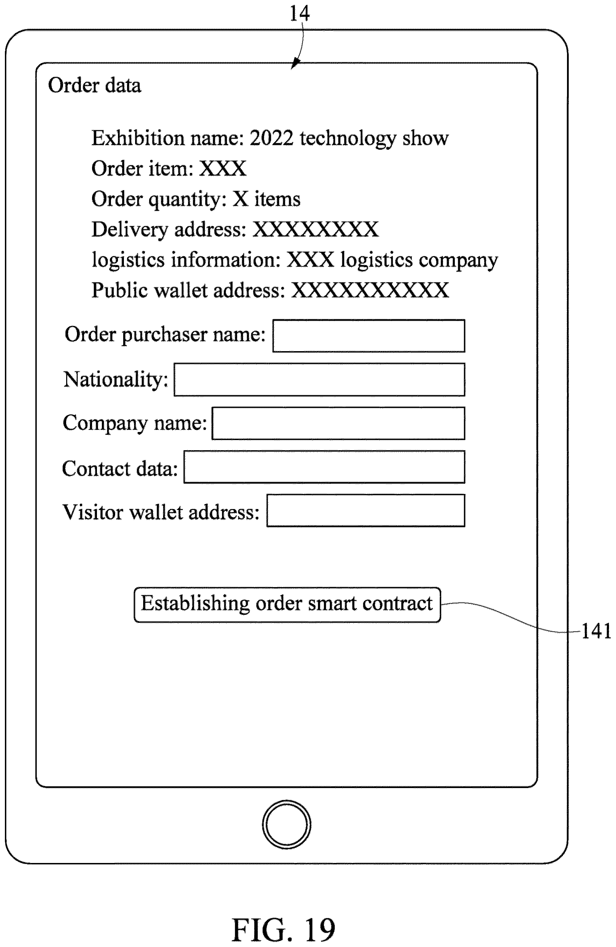

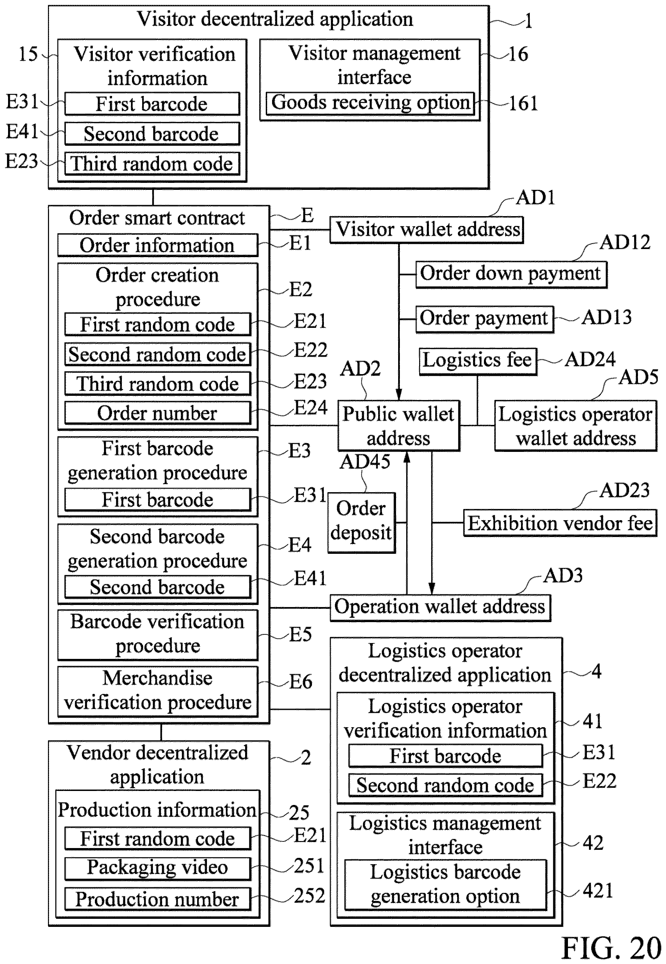

Reference is made to FIG. 18, FIG. 19, and FIG. 20. FIG. 18 is a schematic diagram of one of the implementations of the virtual reality exhibition venue of the visitor decentralized application of the cloud-based cyber trade show system of the present disclosure, FIG. 19 is a schematic diagram of an order interface of the visitor decentralized application of the cloud-based cyber trade show system of the present disclosure, and FIG. 20 is another block diagram of the cloud-based cyber trade show system of the present disclosure. The visitor decentralized application 1 further includes an order interface 14. The virtual reality exhibition venue 11 displayed by the visitor decentralized application 1 has at least one order option 114 at each of the booths, and the corresponding order interface 14 is presented when the order option 114 is selected. The order interface 14 allows the visitor to input order input information. For example, the order input information includes an order item, an order quantity, a delivery address, logistics information, the visitor information, and a visitor wallet address. In addition, the order interface 14 includes an order smart contract generation option 141. After the order smart contract generation option 141 is selected, the data that are input into the order interface 14 are used to establish an order smart contract E.

As shown in FIG. 20, the order smart contract E includes order information E1, an order creation procedure E2, a first barcode generation procedure E3, a second barcode generation procedure E4, and a barcode verification procedure E5. The order information E1 includes the order input information, at least one order item price, the booth number, and an exhibition vendor number. The order information E1 is mainly used to record the data input into the order interface 14 by the visitor.

When the order smart contract E is created, the order creation procedure E2 transfers an order down payment AD 12 from the visitor wallet address AD1 to the public wallet address AD2, and generates a first random code E21, a second random code E22, and a third random code E23. The order creation procedure E2 further transfers an order deposit AD45 from the vendor wallet address AD4 to the public wallet address AD2. The order creation procedure E2 further transmits the order information E1, the first random code E21, and an order number E24 to the vendor decentralized application 2, transmits the order number E24 and the second random code E22 to the logistics operator decentralized application 4, and transmits the third random code E23 and the order number E24 to the visitor decentralized application 1.

The first barcode generation procedure E3 is configured to be called by the vendor decentralized application 2 to verify whether or not production information 25 transmitted from the vendor decentralized application 2 includes the first random code E21, a packaging video 251, and a production number 252. If yes, the first barcode generation procedure E3 generates and forwards a first barcode E31 to the vendor decentralized application 2, and transfers an order payment AD13 from the visitor wallet address AD1 to the public wallet address AD2. The first barcode E31 includes the first random code E21 and the order number E24.

The second barcode generation procedure E4 is configured to be called by the logistics operator decentralized application 4 and to verify whether or not logistics operator verification information 41 transmitted from the logistics operator decentralized application 4 includes the second random code E22 and the first barcode E31. If yes, the second barcode generation procedure E4 generates and forwards a second barcode E41 to the vendor decentralized application 2. The second barcode E41 includes the second random code E22 and the order number E24.

The barcode verification procedure E5 is configured to be called by the visitor decentralized application 1 and to verify whether or not visitor verification information 15 transmitted from the visitor decentralized application 1 includes the first random code E21, the second random code E22, and the third random code E23. If yes, the barcode verification procedure E5 transfers an exhibition vendor fee AD23 from the public wallet address AD2 to the vendor wallet address AD4, and transfers a logistics fee AD24 from the public wallet address AD2 to a logistics operator wallet address AD5.

Conversely, when the barcode verification procedure E5 verifies that the visitor verification information 15 transmitted from the visitor decentralized application 1 does not include the first random code E21, the second random code E22, and the third random code E23, the barcode verification procedure E5 does not transfer relevant payments from the public wallet address AD2 to the logistics operator wallet address AD5 and the vendor wallet address AD4.

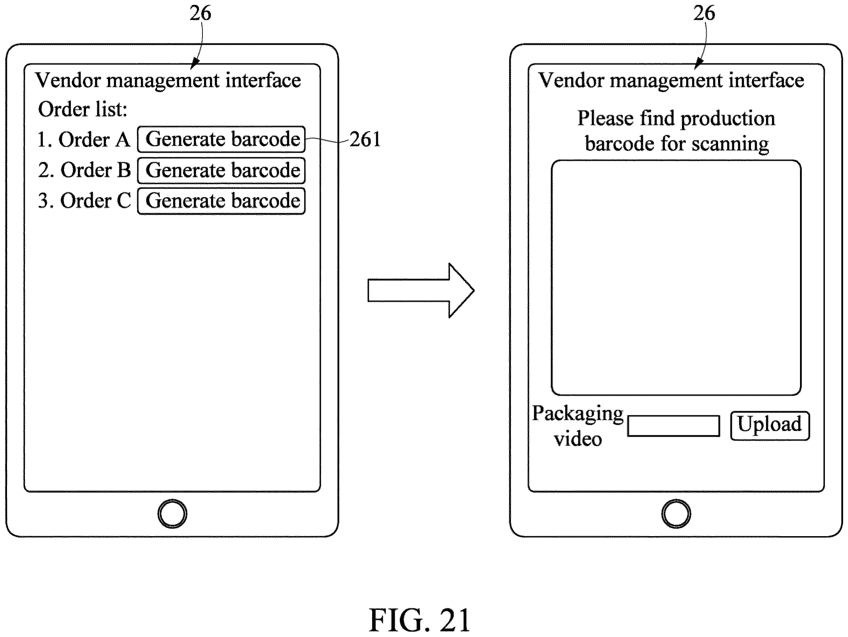

Reference is made to FIG. 20 and FIG. 21, in which FIG. 21 is a schematic diagram showing changes of the vendor management interface of the vendor decentralized application of the cloud-based cyber trade show system of the present disclosure. When the vendor decentralized application 2 receives the order information E1, a vendor management interface 26 of the vendor decentralized application 2 correspondingly generates a vendor barcode generation option 261. After the vendor barcode generation option 261 is selected, the vendor management interface 26 requests the vendor to read in the production number 252 and upload the packaging video 251. The vendor management interface 26 integrates the production number 252, the packaging video 251, and the second random code E22 into the production information 25, and calls the first barcode generation procedure E3. The production number includes the order number, a production apparatus code, and a production time. In practice, the production number can be formed on a product by spraying and coating. The production apparatus code is a number that corresponds to a production apparatus for producing the product, and the production time indicates a time by which the production apparatus produces the product that corresponds to the order number. Since one production apparatus cannot produce two products that correspond to a same order number at the same time, the production number can be regarded as a unique code.

That is to say, when the exhibition vendor produces a product according to an order, the exhibition vendor needs to use the vendor management interface 26 of the vendor decentralized application 2 for scanning the production number 252 on the product. The exhibition vendor also uses the vendor management interface 26 to upload the packaging video 251, so as to obtain the first barcode E31 that is adhered to a product package box. After the first barcode E31 is adhered to the product package box by the exhibition vendor, the exhibition vendor may deliver the product to a logistics operator.

When the first barcode generation procedure E3 generates the first barcode E31, the first barcode generation procedure E3 also transmits the first barcode E31 to the logistics operator decentralized application 4. When the logistics operator decentralized application 4 receives the first barcode E31, a logistics management interface 42 of the logistics operator decentralized application 4 correspondingly generates a logistics barcode generation option 421. After the logistics barcode generation option 421 is selected, the logistics management interface 42 requests the logistics operator to scan a barcode on a product package box received by the logistics operator, so as to obtain scan information.

After the logistics management interface 42 obtains the scan information, the logistics management interface 42 verifies whether or not the scan information includes the first barcode E31. If yes, the scan information and the second random code E22 are integrated into logistics operator verification information 41. If not, the logistics operator verification information 41 is not generated. It should be noted that, when the first barcode generation procedure E3 generates the first barcode E31, the first barcode generation procedure E3 transmits the first barcode E31 to the logistics management interface 42. Therefore, when the logistics management interface 42 obtains the scan information, the logistics management interface 42 may use the first barcode E31 received earlier to determine whether or not the scan information currently scanned includes the first barcode E31. It is worth mentioning that, since the first barcode E31 includes the first random code E21 and the first random code E21 is generated randomly, the first barcodes E31 on the product package boxes of the orders are different from one another, so that people with malicious intent are unable to mass produce the correct first barcodes E31.

After the logistics management interface 42 generates the logistics operator verification information 41, the logistics management interface 42 calls the second barcode generation procedure E4, so as to transmit the logistics operator verification information 41 to the second barcode generation procedure E4. After the second barcode generation procedure E4 verifies that the logistics operator verification information 41 includes the first barcode E31 and the second random code E22, the logistics operator decentralized application 4 accordingly obtains the second barcode E41. Then, the logistics operator may have the second barcode E41 adhered to the same product package box. After the second barcode E41 is adhered to the product package box by the logistics operator, the logistics operator may deliver the product to the visitor.

That is to say, when the logistics operator receives the product package box that includes the product from the exhibition vendor, the logistics operator needs to use the logistics management interface 42 of the logistics operator decentralized application 4 for scanning the first barcode E31 on the product package box. If the barcode that is scanned is verified to be correct, the logistics management interface 42 can obtain the second barcode E41. Then, the logistics operator may have the second barcode E41 adhered to the product package box, so as to continue the delivery process.

When the exhibition vendor accidentally delivers the product to a different logistics operator, this logistics operator will not be able to find a corresponding order and the logistics barcode generation option 421 in the logistics management interface 42 of the logistics operator decentralized application 4.

Since the first random code of each order is different, if the exhibition vendor delivers the product to the correct logistics operator, but said logistics operator selects the incorrect logistics barcode generation option 421 in the logistics management interface 42, the logistics management interface 42 will determine that the scanned barcode does not include the first random code E21 corresponding to the incorrect logistics barcode generation option 421 during a phase of verifying the scanned barcode. Accordingly, the logistics operator verification information 41 is not generated, and the second barcode E41 cannot be obtained.

When the first barcode generation procedure E3 generates the first barcode E31, the first barcode generation procedure E3 also transmits the first barcode E31 to the visitor decentralized application 1. When the second barcode generation procedure E4 generates the second barcode E41, the second barcode generation procedure E4 also transmits the second barcode E41 to the visitor decentralized application 1. When the visitor decentralized application 1 receives the second barcode E41, a visitor management interface 16 of the visitor decentralized application 1 correspondingly generates a goods receiving option 161. When the goods receiving option 161 is selected, the visitor management interface 16 requests the visitor to scan two barcodes on a product package box received by the visitor to obtain two pieces of goods receiving scan information.

How the logistics management interface 42 and the logistics barcode generation option 421 are presented in the logistics operator decentralized application 4 can be substantially the same as that shown in FIG. 21, but is not limited thereto. How the visitor management interface 16 and the goods receiving option 161 are presented in the visitor decentralized application 1 can be substantially the same as that shown in FIG. 21, but is not limited thereto.

After the visitor management interface 16 reads the two pieces of goods receiving scan information, the visitor management interface 16 verifies whether or not the two pieces of goods receiving scan information each include the first random code E21 and the second random code E22. If yes, the visitor management interface 16 integrates the two pieces of goods receiving scan information and the third random code E23 into the visitor verification information 15 for being transmitted to the barcode verification procedure E5, and the visitor management interface 16 displays information indicating a correct result. If not, the visitor verification information 15 is not generated and the visitor management interface 16 displays information indicating an incorrect result. The logistics operator may see the information indicating the correct or incorrect result displayed by the visitor management interface 16, so as to determine whether or not the product is delivered to the correct visitor.

Accordingly, through the first random code, the second random code, the third random code, the first barcode generation procedure, and the second barcode generation procedure, the logistics operator can be ensured to collect and deliver the correct product, and the visitor can be ensured to correctly receive the product ordered thereby.

In an exemplary embodiment, the order interface further displays a refund date according to the data input by a user, and the order smart contract E further includes a refund procedure. On the refund date, the refund procedure determines whether or not the first barcode generation procedure E3 is executed. If not, the refund procedure transfers the order down payment AD 12, the order payment AD 13, and the order deposit AD45 from the public wallet address AD2 to the visitor wallet address AD1.

In other words, after the visitor has placed the order, if the exhibition vendor does not send the corresponding production information 25 to the order smart contract E through the vendor decentralized application 2 by the refund date, the visitor that places the order will not only receive the order down payment AD 12 and the order payment AD 13, but also receive the compensation paid by the exhibition vendor (i.e., the order deposit AD45). More specifically, after the order is placed, relevant follow-up operations may not be carried out smoothly due to relevant personnel not receiving merchandise before the refund date. Therefore, through the above design, even though the relevant personnel cannot receive the merchandise, some compensation can at least be obtained. In this way, the exhibition vendor can be prompted to produce and deliver the products on time.

Reference is made to FIG. 20 again. In one variation of the embodiments, the order smart contract E further includes a merchandise verification procedure E6. The merchandise verification procedure E6 is configured to be called by the visitor decentralized application 1 to verify whether or not production number scan information transmitted from the visitor decentralized application 1 includes the production number 252 received by the first barcode generation procedure E3. If yes, the merchandise verification procedure E6 performs a merchandise warranty registration operation, and the merchandise verification procedure E6 transfers the order deposit AD45 from the public wallet address AD2 to the vendor wallet address AD4, if not, the merchandise verification procedure E6 sends a notification to the visitor decentralized application 1, and the merchandise verification procedure E6 transfers the order deposit AD45 from the public wallet address AD2 to the visitor wallet address AD1.

More specifically, the visitor management interface 16 may include a merchandise verification option. When the merchandise verification option is selected, the visitor decentralized application 1 requests the visitor to scan the production number located on the product and transmit the production number to the order smart contract E for verification. If the verification is correct, the order deposit paid by the exhibition vendor will be transferred back to the exhibition vendor. Conversely, if the verification is incorrect, the order deposit paid by the exhibition vendor will be paid to the visitor as compensation.

Through the abovementioned merchandise verification procedure E6, when the visitor receives the product, the visitor may check whether or not the product has been switched through a simple operation. If the product is correct, the product will be automatically registered for warranty. On the other hand, if the product is incorrect, the visitor will receive a notification.

In summary, the cloud-based cyber trade show system of the present disclosure allows the visitors to visit trade shows anytime and anywhere in a virtual reality manner. Further, through the relevant smart contracts, automatic billing, transfer and refund can be achieved. In this way, the costs of the visitors visiting the trade shows can be significantly reduced, and relevant payment disputes can also be effectively avoided. The cloud-based cyber trade show system of the present disclosure allows relevant inspection, billing, transfer and refund procedures to be automatically performed for the venue operators, the exhibition vendors, the visitors (i.e., those who place orders) and the logistics operators through different decentralized applications in cooperation with relevant smart contracts, so as to effectively avoid payment disputes therebetween and the problem of the product being switched. Furthermore, the venue operators, the exhibition vendors, the visitors (i.e., those who place orders) and the logistics operators may hold the trade shows at a lower cost compared to conventional trade shows.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its scope.

## Claims

1. A cloud-based cyber trade show system (100) operated on a blockchain, **characterized by** comprising:
a visitor decentralized application (1) displaying at least one virtual reality exhibition venue (11), wherein the virtual reality exhibition venue (11) presents a plurality of booths (111) in a virtual reality; and
a vendor decentralized application (2) allowing an exhibition vendor to log in, wherein the vendor decentralized application (2) includes:
an exhibition venue interface (21) presenting a plurality of exhibition options (21A), wherein each of the exhibition options (21A) corresponds to one of the booths (111) in the virtual reality exhibition venue (11), and each of the booths (111) includes a booth number that is unique; and
a listing interface (22), wherein the listing interface (22) is presented when any of the exhibition options (21A) is selected; wherein, when the listing interface (22) is presented, booth information is displayed, and the exhibition vendor is allowed to input at least one piece of exhibit data and a vendor wallet address (AD4), so as to establish an exhibition smart contract (B); wherein the exhibition smart contract (B) includes:
a starting procedure (B2), wherein, when the exhibition smart contract (B) is established, the starting procedure (B2) transfers a listing fee (AD41) from the vendor wallet address (AD4) to a public wallet address (AD2), and transfers a listing deposit (AD31) and an operation deposit (AD32) from an operation wallet address (AD3) of a venue operator to the public wallet address (AD2);
exhibition information including a contract establishing date, a start date, an end date, the exhibit data, a verification date, the vendor wallet address (AD4), the booth information, the listing fee, vendor data, the public wallet address (AD2), the operation wallet address, and the listing deposit, wherein the booth information includes the booth number and a booth image;
an exhibition data verification procedure (B3) being called to verify whether or not the exhibit data are exhibited at the booth number of the virtual reality exhibition venue (11), and to correspondingly generate verification information (B31);
a listing transfer procedure (B4) being used to call the exhibition data verification procedure (B3) on the verification date for obtaining the verification information (B31), wherein, when the listing transfer procedure (B4) determines, according to the verification information (B31), that the exhibit data are exhibited at one of the booths (111) that corresponds to the booth number, the listing transfer procedure (B4) transfers the listing fee (AD41) from the public wallet address (AD2) to the operation wallet address (AD3), transfers the listing deposit (AD31) from the public wallet address (AD2) to the operation wallet address (AD3), and transfers an exhibition fee (AD42) from the vendor wallet address (AD4) to the public wallet address(AD2); wherein, when the listing transfer procedure (B4) determines, according to the verification information (B31), that the exhibit data are not exhibited at the one of the booths (111) that corresponds to the booth number, the listing transfer procedure (B4) transfers the listing fee (AD41) from the public wallet address (AD2) to the vendor wallet address (AD4), and transfers the listing deposit (AD31) from the public wallet address (AD2) to the vendor wallet address (AD4);
an exhibition transfer procedure (B5) being used to call the exhibition data verification procedure (B3) on the start date for obtaining the verification information (B31), wherein, when the exhibition transfer procedure determines, according to the verification information (B31), that the exhibit data are exhibited at one of the booths (111) that corresponds to the booth number, the exhibition transfer procedure (B5) transfers an exhibition front payment (AD21)from the public wallet address (AD2) to the operation wallet address (AD3); wherein, when the exhibition transfer procedure (B5) determines, according to the verification information (B31), that the exhibit data are not exhibited at the one of the booths (111) that corresponds to the booth number, the exhibition transfer procedure (B5) transfers the exhibition fee (AD42) from the public wallet address (AD2) to the vendor wallet address (AD4), and transfers the listing deposit (AD31) from the public wallet address (AD2) to the vendor wallet address (AD4);
a random inspection procedure (B6) being used to randomly call the exhibition data verification procedure (B3) at least once each day between the start date and the end date for obtaining the verification information (B31), and to store the verification information (B31) as random inspection result information (B61); and
a balance payment transfer procedure (B7) being used to transfer, according to the random inspection result information (B61), a predetermined percentage of an exhibition balance payment (AD22) from the public wallet address (AD2) to the operation wallet address (AD3) after the end date, and to close the exhibition smart contract (B); wherein the predetermined percentage ranges from 0% to 100%, and a sum of the exhibition front payment (AD21) and the exhibition balance payment (AD22) equals to the exhibition fee (AD42);
wherein, when the balance payment transfer procedure (B7) determines, according to the random inspection result information (B61), that the verification information (B31) obtained by the random inspection procedure (B6) each time indicates that the exhibit data are exhibited at one of the booths (111) that corresponds to the booth number, the predetermined percentage is 100%;
wherein, when the balance payment transfer procedure (B7) determines, according to the random inspection result information (B61), that the verification information (B31) obtained by the random inspection procedure (B6) each time indicates that the exhibit data are not exhibited at one of the booths (111) that corresponds to the booth number, the predetermined percentage is 0%, and the balance payment transfer procedure (B7) transfers the exhibition fee (AD42) from the public wallet address (AD2) to the vendor wallet address (AD4), and transfers the operation deposit (AD32) from the public wallet address (AD2) to the vendor wallet address (AD4).

2. The cloud-based cyber trade show system (100) according to claim 1, wherein the listing interface (22) includes a virtual reality data upload option (221), and the listing interface (22) displays a virtual reality booth screen (224) that corresponds to the booth number in a virtual reality manner when the virtual reality data upload option (221) is selected; wherein the virtual reality booth screen (224) includes a plurality of exhibition positions (2241) and a plurality of exhibition position options (2242), each of the exhibition positions (2241) corresponds to one of the exhibition position options (2242), and any of the exhibition position options (2242) is selectable for allowing the exhibition vendor to upload one piece of the exhibit data; wherein, when any of the exhibition position options (2242) is selected and the exhibition vendor completes uploading the exhibit data, the exhibit data uploaded by the exhibition vendor is presented in real time at the exhibition position (2241) that corresponds to the selected exhibition position option (2242).

3. The cloud-based cyber trade show system (100) according to claim 1, wherein the virtual reality exhibition venue (11) further includes a stage space (11A), and the stage space (11A) is used to exhibit an advertisement; wherein the listing interface (22) further includes an advertisement option,
and the listing interface (22) is converted into an advertisement interface (23) when the advertisement option is selected; wherein the advertisement interface (23) allows the exhibition vendor to input at least one advertisement date, at least one advertisement time, an advertisement play count, an advertisement length, an advertisement content, and an advertisement position; wherein the advertisement interface (23) generates an advertisement fee (AD44) according to inputs of the exhibition vendor and establishes a timed advertisement smart contract (C); wherein the timed advertisement smart contract (C) includes:
a starting procedure (C1), wherein, when the timed advertisement smart contract (C) is established, the starting procedure (C1) of the timed advertisement smart contract (C) transfers an advertisement deposit (AD43) from the vendor wallet address (AD4) to the public wallet address (AD2);
advertisement information (C2) including the vendor data, the advertisement date, the advertisement time, the advertisement play count, the advertisement length, the advertisement content, the advertisement position, the advertisement fee (AD44), the vendor wallet address (AD4), the public wallet address (AD2), and the operation wallet address (AD3);
an advertisement procedure (C3), wherein the advertisement procedure (C3) is configured to be called to exhibit the advertisement content at the advertisement position and at the advertisement time on the advertisement date for a duration of the advertisement length;
a billing procedure (C4) being used to transfer one portion of the advertisement fee (AD44) from the vendor wallet address (AD4) to the public wallet address (AD2) after each execution of the advertisement procedure (C3); wherein the billing procedure (C4) is called by the advertisement procedure (C3) each time after the advertisement content is exhibited; and
a transfer procedure (C5) being used to transfer the advertisement fee (AD44) from the public wallet address (AD2) to the operation wallet address (AD3) after the billing procedure (C4) is executed for a number of times equivalent to the advertisement play count or is called by the advertisement procedure (C3), and to end the timed advertisement smart contract (C);
wherein, when the advertisement procedure (C3) is called and fails to exhibit the advertisement content at the advertisement position, the advertisement procedure (C3) does not call the billing procedure (C4) but calls the transfer procedure (C5);
wherein, each time the billing procedure (C4) is executed, in response to the one portion of the advertisement fee (AD44) being not properly transferred from the vendor wallet address (AD4) to the public wallet address (AD2), the billing procedure (C4) transfers the advertisement deposit (AD43) from the public wallet address (AD2) to the operation wallet address (AD3) and calls the transfer procedure (C5).

4. The cloud-based cyber trade show system (100) according to claim 3, wherein the advertisement interface (23) includes an advertisement content upload option (231) and a livestream option (232); wherein, when the livestream option (232) is selected and the timed advertisement smart contract (C) is established, the advertisement procedure (C3) enables a livestream connection function at the advertisement position on the advertisement date, and the exhibition vendor uses the vendor decentralized application (2) to perform livestream at the advertisement position.

5. The cloud-based cyber trade show system (100) according to claim 1, wherein the virtual reality exhibition venue (11) further includes a stage space (11A), and the stage space (11A) is used to exhibit an advertisement; wherein the listing interface (22) further includes an advertisement option, and the listing interface (22) is converted into an advertisement interface (23) when the advertisement option is selected; wherein the advertisement interface (23) allows the exhibition vendor to input a predetermined traffic, at least one advertisement date, at least one advertisement time, an advertisement play count, an advertisement length, an advertisement content, and an advertisement position; wherein the advertisement interface (23) generates an advertisement fee (AD44) according to inputs of the exhibition vendor and establishes a traffic advertisement smart contract (D); wherein the traffic advertisement smart contract (D) includes:
a starting procedure (D1), wherein, when the traffic advertisement smart contract (D) is established, the starting procedure (D1) of the traffic advertisement smart contract (D) transfers an advertisement deposit (AD43) from the vendor wallet address (AD4) to the public wallet address (AD2);
advertisement information (D2) including the predetermined traffic, the advertisement position, a predetermined time, the advertisement content, the advertisement play count, the advertisement fee (AD44), the vendor wallet address (AD4), the public wallet address (AD2), and the operation wallet address (AD3);
a billing procedure (D4) being used to transfer one portion of the advertisement fee (AD44) from the vendor wallet address (AD4) to the public wallet address (AD2) after each execution of the advertisement procedure (D3);
an advertisement procedure (D3) being used to exhibit the advertisement content at the advertisement position for a duration of the predetermined time, wherein the billing procedure (D4) is called by the advertisement procedure (D3) each time after the advertisement content is exhibited;
a monitoring procedure (D6) being used to monitor a real-time browsing traffic of the booth, wherein, when the real-time browsing traffic is lower than the predetermined traffic and a number of times that the advertisement procedure (D3) is called is not greater than the advertisement play count, the monitoring procedure (D6) calls the advertisement procedure (D3); and
a transfer procedure (D5) being used to transfer the advertisement fee (AD44) from the public wallet address (AD2) to the operation wallet address (AD3) after the billing procedure (D4) is executed for a number of times equivalent to the advertisement play count or is called by the advertisement procedure (D3), and to end the traffic advertisement smart contract (D);
wherein, when the advertisement procedure (D3) is called and fails to exhibit the advertisement content at the advertisement position, the advertisement procedure (D3) does not call the billing procedure (D4) but calls the transfer procedure (D5);
wherein, each time the billing procedure (D4) is executed, in response to the one portion of the advertisement fee (AD44) being not properly transferred from the vendor wallet address (AD4) to the public wallet address (AD2), the billing procedure (D4) transfers the advertisement deposit (AD43) from the public wallet address (AD2) to the operation wallet address (AD3) and calls the transfer procedure (D5).

6. The cloud-based cyber trade show system (100) according to claim 1, wherein the visitor decentralized application (1) further includes a ticketing interface (12) that displays at least one ticketing option (121), and the ticketing option (121) corresponds to the virtual reality exhibition venue (11) currently displayed; wherein, when the ticketing option (121) is selected, the ticketing interface (12) requires a visitor to input a visitor wallet address (AD1), so as to establish a ticketing smart contract (A); wherein the ticketing smart contract (A) includes:
ticketing information (A1) including virtual exhibition venue information, a ticket purchase date, the visitor wallet address (AD1), a ticket fee, the public wallet address (AD2), and the operation wallet address; wherein the virtual exhibition venue information includes the start date, the end date, and exhibition venue identification data;
a billing procedure (A2), wherein, when the ticketing smart contract (A) is established, the billing procedure (A2) is executed and transfers the ticket fee from the visitor wallet address (AD1) to the public wallet address (AD2);
a transfer procedure, wherein, when the visitor enters the virtual reality exhibition venue (11) that corresponds to the virtual exhibition venue information in the ticketing information, the transfer procedure transfers the ticket fee (AD11) from the public wallet address (AD2) to the operation wallet address (AD3); and
a refund procedure (A4) being automatically executed on the end date to determine whether or not the visitor enters the virtual reality exhibition venue (11) before the end date, wherein, when the refund procedure (A4) determines that the visitor does not enter the virtual reality exhibition venue (11) before the end date, the refund procedure (A4) transfers the ticket fee (AD11) from the public wallet address (AD2) to the visitor wallet address (AD 1).

7. The cloud-based cyber trade show system (100) according to claim 6, wherein the ticketing interface (12) further requires the visitor to input visitor information, and the visitor information includes a nationality, a gender, an age, a company name, a visitor name, and contact information; wherein the vendor decentralized application (2) further includes a management interface (24), and the management interface (24) displays an exhibition venue floor plan (241) and a plurality of real-time visitor patterns (242); wherein the exhibition venue floor plan (241) includes a plurality of booth patterns (2411), each of the booth patterns (2411) represents one of the booths (111) in the virtual reality exhibition venue (11), and each of the real-time visitor patterns (242) represents a real-time position of the visitor currently in the virtual reality exhibition venue (11); wherein the management interface (24) further includes a filtering option (2412), and the filtering option (2412) is operated to selectively hide a portion of the real-time visitor patterns (242) according to the nationality, the gender, or the age.

8. The cloud-based cyber trade show system (100) according to claim 5, wherein the ticketing smart contract (A) further includes a recording procedure (A5); wherein, each time the visitor enters the virtual reality exhibition venue (11), the recording procedure (A5) records a movement path of the visitor and a dwell time of the visitor at each of the booths (111) in the virtual reality exhibition venue (11) until the visitor leaves the virtual reality exhibition venue (11), and correspondingly generates recording information (A51); wherein the visitor decentralized application (1) further includes a path recording interface (13) that calls the recording procedure (A5) to obtain the recording information (A51); wherein the visitor decentralized application (1) displays a browsing path (113) of the visitor in the virtual reality exhibition venue (11) and the dwell time at each of the browsed booths (111) based on the recording information (A51).

9. The cloud-based cyber trade show system (100) according to claim 8, wherein, when the visitor logs in the virtual reality exhibition venue (11) for a second time or more times, the booths (111) that are browsed are marked in the virtual reality exhibition venue (11) according to the recording information.

10. The cloud-based cyber trade show system (100) according to claim 1, wherein the visitor decentralized application (1) further includes an order interface (14); wherein the virtual reality exhibition venue (11) displayed by the visitor decentralized application (1) has at least one order option (114) at each of the booths (111), and the corresponding order interface (14) is presented when the order option (114) is selected; wherein the order interface (14) allows a visitor to input order input information, and the order input information includes an order item, an order quantity, a delivery address, logistics information, visitor information and a visitor wallet address (AD1), so as to establish an order smart contract (E); wherein the order smart contract (E) includes:
order information (E1) including the order input information, at least one order item price, the booth number, and an exhibition vendor number;
an order creation procedure (E2), wherein, when the order smart contract (E) is created, the order creation procedure (E2) transfers an order down payment (AD12) from the visitor wallet address (AD1) to the public wallet address (AD2), and generates a first random code (E21), a second random code (E22), and a third random code (E23); wherein the order creation procedure (E2) further transmits the order information (E1), the first random code (E21), and an order number (E24) to the vendor decentralized application (2), transmits the order number (E24) and the second random code (E22) to a logistics operator decentralized application (4), and transmits the third random code (E23) and the order number (E24) to the visitor decentralized application (1);
a first barcode generation procedure (E3), wherein the first barcode generation procedure (E3) is configured to be called by the vendor decentralized application (2) and to verify whether or not production information (25) transmitted from the vendor decentralized application (2) includes the first random code (E21), a packaging video (251), and a production number (252); wherein, in response to the production information (25) including the first random code (E21), the packaging video (251), and the production number (252), the first barcode generation procedure (E3) generates and forwards a first barcode (E31) to the vendor decentralized application (2), and transfers an order payment (AD13) from the visitor wallet address (AD1) to the public wallet address (AD2); wherein the first barcode (E31) includes the first random code (E21) and the order number (E24);
a second barcode generation procedure (E4), wherein the second barcode generation procedure (E4) is configured to be called by the logistics operator decentralized application (4) and to verify whether or not logistics operator verification information (41) transmitted from the logistics operator decentralized application (4) includes the second random code (E22) and the first barcode (E31); wherein, in response to the logistics operator verification information (41) including the second random code (E22) and the first barcode (E31), the second barcode (E41) generation procedure (E4) generates and forwards a second barcode (E41) to the vendor decentralized application (2); wherein the second barcode (E41) includes the second random code (E22) and the order number (E24); and
a barcode verification procedure (E5), wherein the barcode verification procedure (E5) is configured to be called by the visitor decentralized application (1) and to verify whether or not visitor verification information (15) transmitted from the visitor decentralized application (1) includes the first random code (E21), the second random code (E22), and the third random code (E23); wherein, in response to the visitor verification information (15) including the first random code (E21), the second random code (E22), and the third random code (E23), the barcode verification procedure (E5) transfers an exhibition vendor fee (AD23) from the public wallet address (AD2) to the vendor wallet address (AD4), and transfers a logistics fee (AD24) from the public wallet address (AD2) to a logistics operator wallet address (AD5).

11. The cloud-based cyber trade show system (100) according to claim 10, wherein, when the vendor decentralized application (2) receives the order information (E1), a vendor management interface (26) of the vendor decentralized application (2) correspondingly generates a vendor barcode generation option (261); wherein, after the vendor barcode generation option (261) is selected, the vendor management interface (26) requests a vendor to read in the production number (252) and upload the packaging video (251); wherein the vendor management interface (26) integrates the production number (252), the packaging video (251), and the second random code (E22) into the production information (25); wherein the production number (252) includes the order number, a production apparatus code, and a production time.

12. The cloud-based cyber trade show system (100) according to claim 10, further comprising the logistics operator decentralized application (4); wherein, when the first barcode generation procedure (E3) generates the first barcode (E31), the first barcode generation procedure (E3) also transmits the first barcode (E31) to the logistics operator decentralized application (4); wherein, when the logistics operator decentralized application (4) receives the first barcode (E31), a logistics management interface (42) of the logistics operator decentralized application (4) correspondingly generates a logistics barcode generation option (421); wherein, after the logistics barcode generation option (421) is selected, the logistics management interface (42) requests a logistics operator to scan a barcode on a product package box received by the logistics operator, so as to obtain scan information; wherein, after the logistics management interface (42) obtains the scan information, the logistics management interface (42) verifies whether or not the scan information includes the first barcode (E31); wherein, in response to the scan information including the first barcode (E31), the scan information and the second random code (E22) are integrated into logistics operator verification information (41) for being transmitted to the second barcode generation procedure (E4); wherein, in response to the scan information not including the first barcode (E31), the logistics operator verification information (41) is not generated.

13. The cloud-based cyber trade show system (100) according to claim 12, wherein, when the first barcode generation procedure (E3) generates the first barcode (E31), the first barcode generation procedure (E3) also transmits the first barcode (E31) to the visitor decentralized application (1); wherein, when the second barcode generation procedure (E4) generates the second barcode (E41), the second barcode generation procedure (E4) also transmits the second barcode (E41) to the visitor decentralized application (1); wherein, when the visitor decentralized application (1) receives the second barcode (E41), a visitor management interface (16) of the visitor decentralized application (1) correspondingly generates a goods receiving option (161); wherein, when the goods receiving option (161) is selected, the visitor management interface (16) requests the visitor to scan two barcodes on a product package box received by the visitor, so as to obtain two pieces of goods receiving scan information; wherein, after the visitor management interface (16) reads the two pieces of goods receiving scan information, the visitor management interface (16) verifies whether or not the two pieces of goods receiving scan information each include the first random code (E21) and the second random code (E22); wherein, in response to the two pieces of goods receiving scan information each including the first random code (E21) and the second random code (E22), the visitor management interface (16) integrates the two pieces of goods receiving scan information and the third random code (E23) into the visitor verification information (15) for being transmitted to the barcode verification procedure (E5), and the visitor management interface (16) displays information indicating a correct result; wherein, in response to the two pieces of goods receiving scan information each not including the first random code (E21) and the second random code (E22), the visitor verification information (15) is not generated, and the visitor management interface (16) displays information indicating an incorrect result.

14. The cloud-based cyber trade show system (100) according to claim 13, wherein the order creation procedure (E2) further transfers an order deposit (AD45) from the vendor wallet address (AD4) to the public wallet address (AD2), the order interface further displays a refund date, and the order smart contract (E) further includes a refund procedure; wherein, on the refund date, the refund procedure determines whether or not the first barcode generation procedure (E3) is executed; wherein, in response to the first barcode generation procedure (E3) being determined not to be executed, the refund procedure transfers the order down payment (AD12), the order payment (AD13), and the order deposit (AD45) from the public wallet address (AD2) to the visitor wallet address (AD1).

15. The cloud-based cyber trade show system (100) according to claim 14, wherein the order smart contract (E) further includes a merchandise verification procedure (E6), the merchandise verification procedure (E6) is configured to be called by the visitor decentralized application (1) to verify whether or not production number scan information transmitted from the visitor decentralized application (1) includes the production number (252); wherein, in response to the production number scan information including the production number (252), the merchandise verification procedure (E6) performs a merchandise warranty registration operation, and the merchandise verification procedure (E6) transfers the order deposit (AD45) from the public wallet address (AD2) to the vendor wallet address (AD4); wherein, in response to the production number scan information not including the production number (252), the merchandise verification procedure (E6) sends a notification to the visitor decentralized application (1), and the merchandise verification procedure (E6) transfers the order deposit (AD45) from the public wallet address (AD2) to the visitor wallet address (AD1).

## Patentansprüche

1. Cloudbasiertes Cyber-Messe-System (100), das auf einer Blockchain betrieben wird, **dadurch gekennzeichnet, dass** es aufweist:
eine dezentrale Besucheranwendung (1), die mindestens einen Virtuelle-Realität-Ausstellung-Ort (11) anzeigt, wobei der Virtuelle-Realität-Ausstellung-Ort (11) mehrere Stände (111) in einer virtuellen Realität präsentiert; und
eine dezentrale Verkäuferanwendung (2), die es einem Messeverkäufer ermöglicht, sich anzumelden, wobei die dezentrale Verkäuferanwendung (2) aufweist:
eine Ausstellungsortschnittstelle (21), die mehrere Ausstellungsoptionen (21A) präsentiert, wobei jede der Ausstellungsoptionen (21A) einem der Stände (111) in dem Virtuelle-Realität-Ausstellung-Ort (11) entspricht und jeder der Stände (111) eine Standnummer aufweist, die eindeutig ist; und
eine Auflistungsschnittstelle (22), wobei die Auflistungsschnittstelle (22) präsentiert wird, wenn irgendeine der Ausstellungsoptionen (21A) ausgewählt wird; wobei, wenn die Auflistungsschnittstelle (22) präsentiert wird, Standinformation angezeigt werden und es dem Ausstellungsverkäufer ermöglicht wird, mindestens ein Stück Ausstellungsgegenstandsdaten und eine Verkäufer-Wallet-Adresse (AD4) einzugeben, um einen intelligenten Ausstellungsvertrag (B) zu erstellen; wobei der intelligente Ausstellungsvertrag (B) aufweist:
eine Startprozedur (B2), wobei, wenn der intelligente Ausstellungsvertrag (B) etabliert ist, die Startprozedur (B2) eine Auflistungsgebühr (AD41) von der Verkäufer-Wallet-Adresse (AD4) zu einer öffentlichen Wallet-Adresse (AD2) transferiert und eine Auflistungssicherheitsleistung (AD31) und eine Betriebssicherheitsleistung (AD32) von einer Betrieb-Wallet-Adresse (AD3) eines Veranstaltungsorts zu der öffentlichen Wallet-Adresse (AD2) transferiert;
Ausstellungsinformation, welche ein Vertrag-Etablierung-Datum, ein Startdatum, ein Enddatum, Ausstellungsgegenstandsinformationen, ein Verifizierungsdatum, die Verkäufer-Wallet-Adresse (AD4), die Standinformation, die Auflistungsgebühr, Verkäuferdaten, die öffentliche Wallet-Adresse (AD2), der Betrieb-Wallet-Adresse und der Auflistungssicherheitsleistung aufweist, wobei die Standinformation die Standnummer und ein Bild des Stands aufweist;
eine Ausstellung-Daten-Verifizierung-Prozedur (B3), die aufgerufen wird, um zu verifizieren, ob die Ausstellungsgegenstandsdaten an der Standnummer des Virtuelle-Realität-Ausstellung-Ortes (11) ausgestellt sind oder nicht, und um dementsprechend Verifizierungsinformation (B31) zu erzeugen;
eine Auflistung-Transfer-Prozedur (B4), die verwendet wird, um die Ausstellung-Daten-Verifizierung-Prozedur (B3) an dem Verifizierungsdatum aufzurufen zu Erhalten der Verifizierungsinformation (B31), wobei, wenn die Auflistung-Transfer-Prozedur (B4) gemäß der Verifizierungsinformation (B31) feststellt, dass die Ausstellungsgegenstandsdaten an einem der Stände (111) ausgestellt werden, welcher der Standnummer entspricht, die Auflistung-Transfer-Prozedur (B4) die Auflistungsgebühr (AD41) von der öffentlichen Wallet-Adresse (AD2) zur Betrieb-Wallet-Adresse (AD3) transferiert, die Auflistungssicherheitsleistung (AD31) von der öffentlichen Wallet-Adresse (AD2) zur Betrieb-Wallet-Adresse (AD3) transferiert und eine Ausstellungsgebühr (AD42) von der Verkäufer-Wallet-Adresse (AD4) zur öffentlichen Wallet-Adresse (AD2) transferiert; wobei, wenn die Auflistung-Transfer-Prozedur (B4) gemäß der Verifizierungsinformation (B31) feststellt, dass die Ausstellungsgegenstandsdaten nicht an dem einen der Stände (111), der der Standnummer entspricht, ausgestellt werden, die Auflistung-Transfer-Prozedur (B4) die Auflistungsgebühr (AD41) von der öffentlichen Wallet-Adresse (AD2) zu der Verkäufer-Wallet-Adresse (AD4) transferiert und die Auflistungssicherheitsleistung (AD31) von der öffentlichen Wallet-Adresse (AD2) zu der Verkäufer-Wallet-Adresse (AD4) transferiert;
eine Ausstellung-Transfer-Prozedur (B5), die verwendet wird, um die Ausstellung-Daten-Verifizierung-Prozedur (B3) an dem Startdatum zum Erhalten der Verifizierungsinformation (B31) aufzurufen, wobei, wenn die Ausstellung-Transfer-Prozedur gemäß der Verifizierungsinformation (B31) feststellt, dass die Ausstellungsgegenstandsdaten an einem der Stände (111), welcher der Standnummer entspricht, ausgestellt werden, die Ausstellung-Transfer-Prozedur (B5) eine Ausstellung-Voraus-Zahlung (AD21) von der öffentlichen Wallet-Adresse (AD2) an die Betrieb-Wallet-Adresse (AD3) transferiert; wobei, wenn die Ausstellung-Transfer-Prozedur (B5) gemäß der Verifizierungsinformation (B31) feststellt, dass die Ausstellungsgegenstandsdaten nicht an dem einen der Stände (111), welcher der Standnummer entspricht, ausgestellt werden, die Ausstellung-Transfer-Prozedur (B5) die Ausstellungsgebühr (AD42) von der öffentlichen Wallet-Adresse (AD2) zu der Verkäufer-Wallet-Adresse (AD4) transferiert und die Auflistungssicherheitsleistung (AD31) von der öffentlichen Wallet-Adresse (AD2) zu der Verkäufer-Wallet-Adresse (AD4) transferiert;
ein Zufallsinspektionsprozedur (B6), das verwendet wird, um die Ausstellung-Daten-Verifizierung-Prozedur (B3) mindestens einmal pro Tag zwischen dem Startdatum und dem Enddatum zufällig aufzurufen zum Erhalten der Verifizierungsinformation (B31), und um die Verifizierungsinformation (B31) als Zufall-Inspektion-Ergebnis-Information (B61) zu speichern; und
eine Saldo-Zahlung-Transfer-Prozedur (B7), die verwendet wird, um gemäß der Zufall-Inspektion-Ergebnis-Information (B61) einen vorbestimmten Prozentsatz einer Ausstellungs-Saldo-Zahlung (AD22) von der öffentlichen Wallet-Adresse (AD2) zu der Betrieb-Wallet-Adresse (AD3) nach dem Enddatum zu transferieren und den intelligenten Ausstellungsvertrag (B) zu schließen; wobei der vorbestimmte Prozentsatz im Bereich von 0% bis 100% ist und eine Summe der Ausstellung-Voraus-Zahlung (AD21) und der Ausstellung-Saldo-Zahlung (AD22) gleich der Ausstellungsgebühr (AD42) ist;
wobei, wenn die Saldo-Zahlung-Transfer-Prozedur (B7) gemäß der Zufall-Inspektion-Ergebnis-Information (B61) feststellt, dass die durch die Zufall-Inspektion-Prozedur (B6) erhaltene Verifizierungsinformation (B31) jedes Mal anzeigt, dass die Ausstellungsgegenstandsdaten an einem der Stände (111) ausgestellt werden, welcher der Standnummer entspricht, der vorbestimmte Prozentsatz 100 % ist;
wobei, wenn die Saldo-Zahlung-Transfer-Prozedur (B7) gemäß der Zufall-Inspektion-Ergebnis-Information (B61) feststellt, dass die durch die Zufall-Inspektion-Prozedur (B6) erhaltene Verifizierungsinformation (B31) jedes Mal anzeigt, dass die Ausstellungsgegenstandsdaten nicht an einem der Stände (111) ausgestellt werden, welcher der Standnummer entspricht, der vorbestimmte Prozentsatz 0 % ist, und die Saldo-Zahlung-Transfer-Prozedur (B7) die Ausstellungsgebühr (AD42) von der öffentlichen Wallet-Adresse (AD2) an die Verkäufer-Wallet-Adresse (AD4) transferiert, und die Betriebssicherheitsleistung (AD32) von der öffentlichen Wallet-Adresse (AD2) an die Verkäufer-Wallet-Adresse (AD4) transferiert.

2. Cloudbasiertes Cyber-Messe-System (100) nach Anspruch 1, wobei die Auflistungsschnittstelle (22) eine Virtuelle-Realität-Daten-Hochladen-Option (221) aufweist, und die Auflistungsschnittstelle (22) einen Virtuelle-Realität-Stand-Bildschirm (224) anzeigt, welcher der Standnummer in einer Virtuelle-Realität-Weise entspricht, wenn die Virtuelle-Realität-Daten-Hochladen-Option (221) ausgewählt wird; wobei der Virtuelle-Realität-Stand-Bildschirm (224) mehrere Ausstellungspositionen (2241) und mehrere Ausstellungspositionsoptionen (2242) aufweist, wobei jede der Ausstellungspositionen (2241) einer der Ausstellungspositionsoptionen (2242) entspricht und irgendeine der Ausstellungspositionsoptionen (2242) auswählbar ist zum Ermöglichen, dass Ausstellungsanbieter ein Stück der Ausstellungsgegenstandsdaten hochladen; wobei, wenn irgendeine der Ausstellungspositionsoptionen (2242) ausgewählt wird und der Ausstellungsverkäufer Hochladen der Ausstellungsgegenstandsdaten abschließt, die von dem Ausstellungsverkäufer hochgeladenen Ausstellungsgegenstandsdaten in Echtzeit an der Ausstellungsposition (2241) präsentiert werden, welche der ausgewählten Ausstellungspositionsoption (2242) entspricht.

3. Cloudbasiertes Cyber-Messe-System (100) nach Anspruch 1, wobei der Virtuelle-Realität-Ausstellung-Ort (11) ferner einen Bühnenbereich (11A) aufweist, und der Bühnenbereich (11A) verwendet wird, um eine Werbung auszustellen; wobei die Auflistungsschnittstelle (22) ferner eine Werbeoption aufweist, und die Auflistungsschnittstelle (22) in eine Werbungsschnittstelle (23) umgewandelt wird, wenn die Werbeoption ausgewählt wird; wobei die Werbeschnittstelle (23) es dem Ausstellungsverkäufer ermöglicht, mindestens ein Werbedatum, mindestens eine Werbezeit, eine Werbespielanzahl, eine Werbelänge, einen Werbeinhalt und eine Werbeposition einzugeben; wobei die Werbeschnittstelle (23) eine Werbegebühr (AD44) gemäß Eingaben des Ausstellungsverkäufers erzeugt und einen zeitlich bemessenen intelligenten Werbevertrag (C) etabliert; wobei der zeitlich bemessene intelligente Werbevertrag (C) aufweist:
eine Startprozedur (C1), wobei, wenn der zeitlich bemessene intelligente Werbevertrag (C) etabliert ist, die Startprozedur (C1) des zeitlich bemessenen intelligenten Werbevertrags (C) eine Werbesicherheitsleistung (AD43) von der Verkäufer-Wallet-Adresse (AD4) an die öffentliche Wallet-Adresse (AD2) transferiert;
Werbeinformation (C2) welche die Verkäuferdaten, das Werbedatums, die Werbezeit, die Werbespielanzahl, die Werbelänge, den Werbeinhalt, die Werbeposition, die Werbegebühr (AD44), die Verkäufer-Wallet-Adresse (AD4), die öffentliche Wallet-Adresse (AD2) und die Betrieb-Wallet-Adresse (AD3) aufweist;
eine Werbeprozedur (C3), wobei die Werbeprozedur (C3) konfiguriert ist, um aufgerufen zu werden, um den Werbeinhalt an der Werbeposition und zur Werbezeit an dem Werbedatum für eine Dauer der Werbelänge auszustellen;
eine Abrechnungsprozedur (C4), die verwendet wird, um einen Teil der Werbegebühr (AD44) von der Verkäufer-Wallet-Adresse (AD4) an die öffentliche Wallet-Adresse (AD2) nach jeder Ausführung der Werbeprozedur (C3) zu transferieren; wobei die Abrechnungsprozedur (C4) von der Werbeprozedur (C3) jedes Mal aufgerufen wird, nachdem der Werbeinhalt ausgestellt wurde; und
eine Transferprozedur (C5), die verwendet wird, um die Werbegebühr (AD44) von der öffentlichen Wallet-Adresse (AD2) an die Betrieb-Wallet-Adresse (AD3) zu transferieren, nachdem die Abrechnungsprozedur (C4) eine Anzahl von Malen ausgeführt wurde, welche der Werbespieleanzahl entspricht, oder durch die Werbeprozedur (C3) aufgerufen wurde, und um den zeitlich bemessenen intelligenten Werbevertrag (C) zu beenden;
wobei, wenn die Werbeprozedur (C3) aufgerufen wird und scheitert den Werbeinhalt an der Werbeposition auszustellen, die Werbeprozedur (C3) die Abrechnungsprozedur (C4) nicht aufruft, aber die Transferprozedur (C5) aufruft;
wobei, jedes Mal, wenn die Abrechnungsprozedur (C4), in Antwort darauf ausgeführt wird, dass der eine Teil der Werbegebühr (AD44) nicht ordnungsgemäß von der Verkäufer-Wallet-Adresse (AD4) an die öffentliche Wallet-Adresse (AD2) transferiert wurde, die Abrechnungsprozedur (C4) die Werbesicherheitsleistung (AD43) von der öffentlichen Wallet-Adresse (AD2) an die Betrieb-Wallet-Adresse (AD3) transferiert und die Transferprozedur (C5) aufruft.

4. Cloudbasiertes Cyber-Messe-System (100) nach Anspruch 3, wobei die Werbeschnittstelle (23) eine Werbe-Inhalt-Hochladen-Option (231) und eine Livestream-Option (232) aufweist; wobei, wenn die Livestream-Option (232) ausgewählt und der zeitlich bemessene intelligente Vertrag (C) etabliert ist, die Werbeprozedur (C3) eine Livestream-Verbindung-Funktion an der Werbeposition am Anzeigedatum aktiviert, und der Messeverkäufer die Verkäufer-Dezentrale-Anwendung (2) verwendet, um Livestream an der Werbeposition durchzuführen.

5. Cloudbasiertes Cyber-Messe-System (100) nach Anspruch 1, wobei der Virtuelle-Realität-Ausstellung-Ort (11) ferner einen Bühnenbereich (11A) aufweist, und der Bühnenbereich (11A) zum Ausstellen einer Werbung verwendet wird; wobei die Auflistungsschnittstelle (22) ferner eine Werbeoption aufweist, und die Auflistungsschnittstelle (22) in eine Werbungsschnittstelle (23) umgewandelt wird, wenn die Werbeoption ausgewählt wird; wobei die Werbeschnittstelle (23) es dem Ausstellungsverkäufer ermöglicht, einen vorbestimmten Verkehr, mindestens ein Werbedatum, mindestens eine Werbezeit, eine Werbespielanzahl, eine Werbelänge, einen Werbeinhalt und eine Werbeposition einzugeben; wobei die Werbeschnittstelle (23) eine Werbegebühr (AD44) gemäß Eingaben des Ausstellungsverkäufers erzeugt und einen intelligenten Verkehrswerbungsvertrag (D) etabliert; wobei der intelligente Verkehrswerbungsvertrag (D) aufweist:
eine Startprozedur (D1), wobei die Startprozedur (D1) des intelligenten Verkehrswerbungsvertrag (D), wenn der intelligente Verkehrswerbungsvertrag (D) etabliert ist, eine Werbesicherheitsleistung (AD43) von der Verkäufer-Wallet-Adresse (AD4) an die öffentliche Wallet-Adresse (AD2) transferiert;
Werbeinformation (D2), welche den vorbestimmten Verkehr, die Werbeposition, eine vorbestimmte Zeit, den Werbeinhalt, die Werbespieleanzahl, die Werbegebühr (AD44), die Verkäufer-Wallet-Adresse (AD4), die öffentliche Wallet-Adresse (AD2) und die Betrieb-Wallet-Adresse (AD3) aufweist;
eine Abrechnungsprozedur (D4), welche verwendet wird, um einen Teil der Werbegebühr (AD44) von der Verkäufer-Wallet-Adresse (AD4) an die öffentliche Wallet-Adresse (AD2) nach jeder Ausführung der Werbeprozedur (D3) zu transferieren;
eine Werbeprozedur (D3), welche verwendet wird, um den Werbeinhalt an der Werbeposition für eine Dauer der vorbestimmten Zeit auszustellen, wobei die Abrechnungsprozedur (D4) durch die Werbeprozedur (D3) jedes Mal aufgerufen wird, nachdem der Werbeinhalt ausgestellt wird;
eine Überwachungsprozedur (D6), welche verwendet wird, um einen Echtzeit-Browsing-Verkehr des Stands zu überwachen, wobei, wenn der Echtzeit-Browsing-Verkehr niedriger ist als der vorbestimmte Verkehr und eine Anzahl von Malen, welche die Werbeprozedur (D3) aufgerufen wird, nicht größer ist als die Werbespielanzahl, die Überwachungsprozedur (D6) die Werbeprozedur (D3) aufruft, und
eine Transferprozedur (D5), welche verwendet wird, um die Werbegebühr (AD44) von der öffentlichen Wallet-Adresse (AD2) an die Betrieb-Wallet-Adresse (AD3) zu transferieren, nachdem die Abrechnungsprozedur (D4) eine Anzahl von Malen ausgeführt wurde, die der Werbespielanzahl entspricht, oder durch die Werbeprozedur (D3) aufgerufen wurde, und um den intelligenten Verkehrswerbevertrag (D) zu beenden;
wobei, wenn die Werbeprozedur (D3) aufgerufen wird und daran scheitert den Werbeinhalt an der Werbeposition auszustellen, die Werbeprozedur (D3) die Abrechnungsprozedur (D4) nicht aufruft, sondern die Transferprozedur (D5) aufruft;
wobei jedes Mal, wenn die Abrechnungsprozedur (D4) ausgeführt wird, in Antwort darauf, dass der eine Teil der Werbegebühr (AD44) nicht ordnungsgemäß von der Verkäufer-Wallet-Adresse (AD4) an die öffentliche Wallet-Adresse (AD2) transferiert wurde, die Abrechnungsprozedur (D4) die Werbesicherheitsleistung (AD43) von der öffentlichen Wallet-Adresse (AD2) an die Betrieb-Wallet-Adresse (AD3) transferiert und die Transferprozedur (D5) aufruft.

6. Cloudbasiertes Cyber-Messe-System (100) nach Anspruch 1, wobei die dezentrale Besucheranwendung (1) ferner eine Ticketing-Schnittstelle (12) aufweist, die mindestens eine Ticketing-Option (121) anzeigt, und die Ticketing-Option (121) dem aktuell angezeigten Virtuelle-Realität-Ausstellung-Ort (11) entspricht; wobei, wenn die Ticketing-Option (121) ausgewählt wird, die Ticketing-Schnittstelle (12) von einem Besucher verlangt, eine Besucher-Wallet-Adresse (AD1) einzugeben, um einen intelligenten Ticketingvertrag (A) zu etablieren; wobei der intelligente Ticketingvertrag (A) aufweist:
Ticketing-Information (A1), welche Virtueller-Ausstellung-Ort-Information, ein Kartenkaufdatum, die Besucher-Wallet-Adresse (AD1), eine Kartengebühr, die öffentliche Wallet-Adresse (AD2) und die Betrieb-Wallet-Adresse aufweist; wobei die Virtueller-Ausstellung-Ort-Information das Startdatum, das Enddatum und Ausstellungsortidentifikationsdaten aufweist;
eine Abrechnungsprozedur (A2), wobei, wenn der intelligente Ticketingvertrag (A) etabliert ist, die Abrechnungsprozedur (A2) ausgeführt wird und die Ticketgebühr von der Besucher-Wallet-Adresse (AD1) an die öffentliche Wallet-Adresse (AD2) transferiert;
eine Transferprozedur, wobei, wenn der Besucher den Virtuelle-Realität-Ausstellung-Ort (11) betritt, der den Virtueller-Ausstellung-Ort-Information in der Ticketinformation entspricht, die Transferprozedur die Ticketgebühr (AD11) von der öffentlichen Wallet-Adresse (AD2) an die Betrieb-Wallet-Adresse (AD3) transferiert; und
eine Rückerstattungsprozedur (A4), welche am Enddatum automatisch ausgeführt wird, um festzustellen, ob der Besucher den Virtueller-Realität-Ausstellung-Ort (11) vor dem Enddatum betritt oder nicht, wobei, wenn die Rückerstattungsprozedur (A4) feststellt, dass der Besucher den Virtueller-Realität-Ausstellung-Ort (11) nicht vor dem Enddatum betritt, die Rückerstattungsprozedur (A4) die Ticketgebühr (AD11) von der öffentlichen Wallet-Adresse (AD2) an die Besucher-Wallet-Adresse (AD1) transferiert.

7. Cloudbasiertes Cyber-Messe-System (100) nach Anspruch 6, wobei die Ticketing-Schnittstelle (12) vom Besucher ferner verlangt Besucherinformation einzugeben, und die Besucherinformation eine Nationalität, ein Geschlecht, ein Alter, einen Firmennamen, einen Besuchernamen und Kontaktinformation aufweist; wobei die dezentrale Verkäuferanwendung (2) ferner eine Verwaltungsschnittstelle (24) aufweist, und die Verwaltungsschnittstelle (24) einen Ausstellungsort-Grundriss (241) und mehrere Echtzeit-Besucher-Muster (242) anzeigt; wobei der Ausstellungsort-Grundriss (241) mehrere Standmuster (2411) aufweist, wobei jedes der Standmuster (2411) einen der Stände (111) in dem Virtuelle-Realität-Ausstellung-Ort (11) darstellt, und jedes der Echtzeit-Besucher-Muster (242) eine Echtzeitposition des Besuchers darstellt, welcher gerade in dem Virtuelle-Realität-Ausstellung-Ort (11) ist; wobei die Verwaltungsschnittstelle (24) ferner eine Filteroption (2412) aufweist und die Filteroption (2412) betrieben wird, um selektiv einen Teil der Echtzeit-Besucher-Muster (242) gemäß der Nationalität, dem Geschlecht oder dem Alter zu verstecken.

8. Cloudbasiertes Cyber-Messe-System (100) nach Anspruch 5, wobei der intelligente Ticketingvertrag (A) ferner eine Aufzeichnungsprozedur (A5) aufweist; wobei die Aufzeichnungsprozedur (A5) jedes Mal, wenn der Besucher den Virtuelle-Realität-Ausstellung-Ort (11) betritt, einen Bewegungspfad des Besuchers und eine Verweilzeit des Besuchers an jedem der Stände (111) an dem Virtuelle-Realität-Ausstellung-Ort (11) aufzeichnet, bis der Besucher den Virtuelle-Realität-Ausstellung-Ort (11) verlässt, und entsprechend Aufzeichnungsinformation (A51) erzeugt; wobei die dezentrale Besucheranwendung (1) ferner eine Pfadaufzeichnungsschnittstelle (13) aufweist, welche die Aufzeichnungsprozedur (A5) aufruft, um die Aufzeichnungsinformation (A51) zu erhalten; wobei die dezentrale Besucheranwendung (1) einen Browsing-Pfad (113) des Besuchers in dem Virtuelle-Realität-Ausstellung-Ort (11) und die Verweilzeit an jedem der gebrowsten Stände (111) basierend auf der Aufzeichnungsinformation (A51) anzeigt.

9. Cloudbasierte Cyber-Messe-System (100) nach Anspruch 8, wobei, wenn sich der Besucher ein zweites Mal oder mehrere Male in den Virtuelle-Realität-Ausstellung-Ort (11) einloggt, die Stände (111), die durchbrowst wurden, in dem Virtuelle-Realität-Ausstellung-Ort (11) entsprechend der Aufzeichnungsinformation markiert werden.

10. Cloudbasiertes Cyber-Messesystem (100) nach Anspruch 1, wobei die dezentrale Besucheranwendung (1) ferner eine Bestellschnittstelle (14) aufweist; wobei der von der dezentralen Besucheranwendung (1) angezeigte Virtuelle-Realität-Ausstellung-Ort (11) an jedem der Stände (111) mindestens eine Bestelloption (114) hat, und die entsprechende Bestellschnittstelle (14) präsentiert wird, wenn die Bestelloption (114) ausgewählt wird; wobei die Bestellschnittstelle (14) es einem Besucher ermöglicht, Bestelleingabeinformation einzugeben, und die Bestelleingabeinformation einen Bestellartikel, eine Bestellmenge, eine Lieferadresse, Logistikinformation, Besucherinformation und eine Besucher-Wallet-Adresse (AD1) aufweist, um einen intelligenten Bestellvertrag (E) zu etablieren; wobei der intelligente Bestellvertrag (E) aufweist:
Bestellinformation (E1), welche die Bestelleingabeinformation, mindestens einen Bestell-Artikel-Preis, die Standnummer und der Ausstellung-Verkäufer-Nummer aufweist;
eine Bestellungserstellungsprozedur (E2), wobei die Bestellungserstellungsprozedur (E2), wenn der intelligente Bestellvertrag (E) erzeugt wird, eine Bestell-Anzahlung (AD12) von der Besucher-Wallet-Adresse (AD1) an die öffentliche Wallet-Adresse (AD2) transferiert und einen ersten Zufallscode (E21), einen zweiten Zufallscode (E22) und einen dritten Zufallscode (E23) erzeugt; wobei die Bestellungserstellungsprozedur (E2) ferner die Bestellinformation (E1), den ersten Zufallscode (E21) und eine Bestellnummer (E24) an die dezentrale Verkäuferanwendung (2) übermittelt, die Bestellnummer (E24) und der zweiten Zufallscode (E22) an eine dezentrale Logistik-Betreiber-Anwendung (4) übermittelt und den dritten Zufallscode (E23) und die Bestellnummer (E24) an die dezentrale Besucheranwendung (1) übermittelt;
eine erste Barcode-Erzeugungsprozedur (E3), wobei die erste Barcode-Erzeugungsprozedur (E3) konfiguriert ist, um von der dezentralen Verkäuferanwendung (2) aufgerufen zu werden und zu verifizieren, ob die von der dezentralen Verkäuferanwendung (2) übermittelten Produktionsinformationen (25) den ersten Zufallscode (E21), ein Verpackungsvideo (251) und eine Produktionsnummer (252) aufweisen oder nicht; wobei als Reaktion darauf, dass die Produktionsinformation (25) den ersten Zufallscode (E21), das Verpackungsvideo (251) und die Produktionsnummer (252) aufweist, die erste Barcode-Erzeugungsprozedur (E3) einen ersten Barcode (E31) erzeugt und an die dezentrale Verkäuferanwendung (2) weiterleitet, und eine Bestellzahlung (AD13) von der Besucher-Wallet-Adresse (AD1) an die öffentliche Wallet-Adresse (AD2) transferiert; wobei der erste Barcode (E31) den ersten Zufallscode (E21) und die Auftragsnummer (E24) aufweist;
eine zweite Barcode-Erzeugungsprozedur (E4), wobei die zweite Barcode-Erzeugungsprozedur (E4) konfiguriert ist, um von der dezentralen Logistik-Betreiber-Anwendung (4) aufgerufen zu werden und zu verifizieren, ob die von der dezentralen Logistik-Betreiber-Anwendung (4) übermittelten Logistik-Betreiber-Verifizierung-Information (41) den zweiten Zufallscode (E22) und den ersten Barcode (E31) aufweist oder nicht; wobei als Reaktion darauf, dass die Logistik-Betreiber-Verifizierung-Information (41) den zweiten Zufallscode (E22) und den ersten Barcode (E31) aufweist, die zweite Barcode(E41)-Erzeugungsprozedur (E4) einen zweiten Barcode (E41) erzeugt und an die dezentrale Verkäuferanwendung (2) weiterleitet; wobei der zweite Barcode (E41) den zweiten Zufallscode (E22) und die Bestellnummer (E24) aufweist; und
eine Barcode-Verifizierungsprozedur (E5), wobei die Barcode-Verifizierungsprozedur (E5) konfiguriert ist, um von der dezentralen Besucheranwendung (1) aufgerufen zu werden und zu verifizieren, ob von der dezentralen Besucheranwendung (1) übermittelte Besucher-Verifizierung-Information (15) den ersten Zufallscode (E21), den zweiten Zufallscode (E22) und den dritten Zufallscode (E23) aufweist oder nicht; wobei als Reaktion darauf, dass die Besucher-Verifizierung-Information (15) den ersten Zufallscode (E21), den zweiten Zufallscode (E22) und den dritten Zufallscode (E23) aufweist, die Barcode-Verifizierungsprozedur (E5) eine Ausstellung-Verkäufer-Gebühr (AD23) von der öffentlichen Wallet-Adresse (AD2) an die Verkäufer-Wallet-Adresse (AD4) transferiert, und eine Logistikgebühr (AD24) von der öffentlichen Wallet-Adresse (AD2) an eine Logistikbetreiber-Wallet-Adresse (AD5) transferiert.

11. Cloudbasiertes Cyber-Messe-System (100) nach Anspruch 10, wobei, wenn die dezentrale Verkäuferanwendung (2) die Bestellinformation (E1) empfängt, eine Verkäufer-Verwaltung-Schnittstelle (26) der dezentralen Verkäuferanwendung (2) entsprechend eine Verkäufer-Barcode-Erzeugung-Option (261) erzeugt; wobei, nachdem die Verkäufer-Barcode-Erzeugung-Option (261) ausgewählt wird, die Verkäufer-Verwaltung-Schnittstelle (26) von einen Verkäufer verlangt, die Produktionsnummer (252) einzulesen und das Verpackungsvideo (251) hochzuladen; wobei die Verkäufer--Verwaltung-Schnittstelle (26) die Produktionsnummer (252), das Verpackungsvideo (251) und den zweiten Zufallscode (E22) in die Produktionsinformation (25) integriert; wobei die Produktionsnummer (252) die Bestellnummer, einen Produktionsvorrichtungscode und eine Produktionszeit aufweist.

12. Cloudbasiertes Cyber-Messesystem (100) nach Anspruch 10, welches ferner die dezentrale Logistik-Betreiber-Anwendung (4) aufweist; wobei, wenn die erste Barcode-Erzeugungsprozedur (E3) den ersten Barcode (E31) erzeugt, die erste Barcode-Erzeugungsprozedur (E3) auch den ersten Barcode (E31) an die dezentrale Logistik-Betreiber-Anwendung (4) übermittelt; wobei, wenn die dezentrale Logistik-Betreiber-Anwendung (4) den ersten Barcode (E31) empfängt, eine Logistik-Verwaltung-Schnittstelle (42) der dezentralen Logistik-Betreiber-Anwendung (4) entsprechend eine Logistik-Barcode-Erzeugung-Option (421) erzeugt; wobei, nachdem die Logistik-Barcode-Erzeugung-Option (421) ausgewählt wird, die Logistik-Verwaltung-Schnittstelle (42) von einem Logistikbetreiber verlangt, einen Barcode auf einer von dem Logistikbetreiber empfangenen Produktverpackungsbox zu scannen, um Scaninformation zu erhalten; wobei, nachdem die Logistik-Verwaltung-Schnittstelle (42) die Scaninformation erhalten hat, die Logistik-Verwaltung-Schnittstelle (42) verifiziert, ob die Scaninformation den ersten Strichcode (E31) aufweist oder nicht; wobei als Reaktion darauf, dass die Scaninformation den ersten Strichcode (E31) aufweist, die Scaninformation und der zweite Zufallscode (E22) in die Logistik-Betreiber-Verifizierung-Information (41) integriert werden zum Übermittelt-Werden an die zweite Barcode-Erzeugungsprozedur (E4); wobei als Reaktion darauf, dass die Scaninformation den ersten Barcode (E31) nicht aufweist, die Logistik-Betreiber-Verifizierung-Information (41) nicht erzeugt wird.

13. Cloudbasiertes Cyber-Messesystem (100) nach Anspruch 12, wobei, wenn die erste Barcode-Erzeugungsprozedur (E3) den ersten Barcode (E31) erzeugt, die erste Barcode-Erzeugungsprozedur (E3) auch den ersten Barcode (E31) an die dezentrale Besucheranwendung (1) übermittelt; wobei, wenn die zweite Barcode-Erzeugungsprozedur (E4) den zweiten Barcode (E41) erzeugt, die zweite Barcode-Erzeugungsprozedur (E4) auch den zweiten Barcode (E41) an die dezentrale Besucheranwendung (1) übermittelt; wobei, wenn die dezentrale Besucheranwendung (1) den zweiten Barcode (E41) empfängt, eine Besucher-Verwaltung-Schnittstelle (16) der dezentralen Besucheranwendung (1) entsprechend eine Warenempfangsoption (161) erzeugt; wobei, wenn die Warenempfangsoption (161) ausgewählt wird, die Besucher-Verwaltung-Schnittstelle (16) vom Besucher verlangt zwei Barcodes auf einer Produktverpackungsbox zu scannen, welche vom Besucher empfangen wird, um zwei Stücke Warenempfangsscaninformation zu erhalten; wobei, nachdem die Besucher-Verwaltung-Schnittstelle (16) die zwei Stücke von Warenempfangsscaninformation liest, die Besucher-Verwaltung-Schnittstelle (16) verifiziert, ob die zwei Stücke von Warenempfangsscaninformation jeweils den ersten Zufallscode (E21) und den zweiten Zufallscode (E22) aufweisen oder nicht; wobei die Besucher-Verwaltung-Schnittstelle (16) als Reaktion darauf, dass die zwei Stücke von Warenempfangsscaninformation jeweils den ersten Zufallscode (E21) und den zweiten Zufallscode (E22) aufweisen, die zwei Stücke von Warenempfangsscaninformation und den dritten Zufallscode (E23) in die Besucher-Verifizierung-Information (15) integriert zum Übermittelt-Werden an die Barcode-Verifizierungsprozedur (E5), und die Besucher-Verwaltung-Schnittstelle (16) Information anzeigt, welche ein korrektes Ergebnis anzeigt; wobei als Reaktion darauf, dass die zwei Stücke von Warenempfangsscaninformation jeweils nicht den ersten Zufallscode (E21) und den zweiten Zufallscode (E22) aufweisen, die Besucher-Verifizierung-Information (15) nicht erzeugt wird, und die Besucher-Verwaltung-Schnittstelle (16) Information anzeigt, welche ein falsches Ergebnis anzeigt.

14. Cloudbasiertes Cyber-Messe-System (100) nach Anspruch 13, wobei die Bestellungserstellungsprozedur (E2) ferner eine Bestellsicherheitsleistung (AD45) von der Verkäufer-Wallet-Adresse (AD4) an die öffentliche Wallet-Adresse (AD2) transferiert, die Bestellschnittstelle ferner ein Rückerstattungsdatum anzeigt, und der intelligente Bestellvertrag (E) ferner eine Rückerstattungsprozedur aufweist; wobei die Rückerstattungsprozedur am Rückerstattungsdatum ermittelt, ob die erste Barcode-Erzeugungsprozedur (E3) ausgeführt wird oder nicht; wobei die Rückerstattungsprozedur als Reaktion darauf, dass ermittelt wird, dass die erste Barcode-Erzeugungsprozedur (E3) nicht ausgeführt wird, die Bestell-Anzahlung (AD12), die Bestellzahlung (AD13) und die Bestellsicherheitsleistung (AD45) von der öffentlichen Wallet-Adresse (AD2) an die Besucher-Wallet-Adresse (AD1) transferiert.

15. Cloudbasiertes Cyber-Messe-System (100) nach Anspruch 14, wobei der intelligente Bestellvertrag (E) ferner eine Warenverifizierungsprozedur (E6) enthält, wobei die Warenverifizierungsprozedur (E6) konfiguriert ist, um von der dezentralen Besucheranwendung (1) aufgerufen zu werden, um zu verifizieren, ob die von der dezentralen Besucheranwendung (1) übermittelte Produktionsnummer-Scaninformation die Produktionsnummer (252) aufweist oder nicht; wobei als Reaktion darauf, dass die Produktionsnummer-Scaninformation die Produktionsnummer (252) aufweist, die Warenverifizierungsprozedur (E6) eine Waren-Garantie-Registrierung-Operation durchführt, und die Warenverifizierungsprozedur (E6) die Bestellsicherheitsleistung (AD45) von der öffentlichen Wallet-Adresse (AD2) an die Verkäufer-Wallet-Adresse (AD4) transferiert; wobei als Reaktion darauf, dass die Produktionsnummer-Scaninformation nicht die Produktionsnummer (252) aufweist, die Warenverifizierungsprozedur (E6) eine Benachrichtigung an die dezentrale Besucheranwendung (1) sendet, und die Warenverifizierungsprozedur (E6) die Bestellsicherheitsleistung (AD45) von der öffentlichen Wallet-Adresse (AD2) an die Besucher-Wallet-Adresse (AD1) transferiert.

## Revendications

1. Système de cyber-exposition commerciale basé sur le cloud (100) opéré sur une blockchain, **caractérisé en ce qu'**il comprend :
une application décentralisée visiteur (1) affichant au moins un lieu d'exposition de réalité virtuelle (11), le lieu d'exposition de réalité virtuelle (11) présentant une pluralité de stands (111) dans une réalité virtuelle ; et
une application décentralisée vendeur (2) permettant à un vendeur d'exposition de se connecter, l'application décentralisée vendeur (2) comprenant :
une interface de lieu d'exposition (21) présentant une pluralité d'options d'exposition (21A), chacune des options d'exposition (21A) correspondant à l'un des stands (111) dans le lieu d'exposition de réalité virtuelle (11), et chacun des stands (111) comprenant un numéro de stand qui est unique ; et
une interface d'inscription (22), l'interface d'inscription (22) étant présentée lorsque l'une quelconque des options d'exposition (21A) est sélectionnée ; où, lorsque l'interface d'inscription (22) est présentée, des informations de stand sont affichées, et le vendeur d'exposition est autorisé à saisir au moins une donnée d'exposition et une adresse de portefeuille de vendeur (AD4), de manière à établir un contrat intelligent d'exposition (B) ; dans lequel le contrat intelligent d'exposition (B) comprend :
une procédure de démarrage (B2), dans lequel, lorsque le contrat intelligent d'exposition (B) est établi, la procédure de démarrage (B2) transfère des frais d'inscription (AD41) de l'adresse de portefeuille de vendeur (AD4) à une adresse de portefeuille public (AD2), et transfère un dépôt d'inscription (AD31) et un dépôt d'opération (AD32) d'une adresse de portefeuille d'opération (AD3) d'un opérateur de lieu à l'adresse de portefeuille public (AD2) ;
des informations d'exposition comprenant une date d'établissement de contrat, une date de début, une date de fin, les données de l'exposition, une date de vérification, l'adresse de portefeuille de vendeur (AD4), les informations de stand, les frais d'inscription, les données de vendeur, l'adresse de portefeuille public (AD2), l'adresse de portefeuille d'opération et le dépôt d'inscription, les informations de stand comprenant le numéro de stand et une image de stand ;
une procédure de vérification de données d'exposition (B3) étant appelée pour vérifier si les données d'exposition sont ou non exposées au numéro de stand du lieu d'exposition de réalité virtuelle (11), et pour générer de manière correspondante des informations de vérification (B31) ;
une procédure de transfert d'inscription (B4) étant utilisée pour appeler la procédure de vérification de données d'exposition (B3) à la date de vérification pour obtenir les informations de vérification (B31), dans lequel, lorsque la procédure de transfert d'inscription (B4) détermine, selon les informations de vérification (B31), que les données d'exposition sont exposées à l'un des stands (111) qui correspond au numéro de stand, la procédure de transfert d'inscription (B4) transfère les frais d'inscription (AD41) de l'adresse de portefeuille public (AD2) à l'adresse de portefeuille d'opération (AD3), transfère le dépôt d'inscription (AD31) de l'adresse de portefeuille public (AD2) à l'adresse de portefeuille d'opération (AD3) et transfère des frais d'exposition (AD42) de l'adresse de portefeuille de vendeur (AD4) à l'adresse de portefeuille public (AD2) ; dans lequel, lorsque la procédure de transfert d'inscription (B4) détermine, en fonction des informations de vérification (B31), que les données d'exposition ne sont pas exposées à l'un des stands (111) correspondant au numéro de stand, la procédure de transfert d'inscription (B4) transfère les frais d'inscription (AD41) de l'adresse de portefeuille public (AD2) à l'adresse de portefeuille de vendeur (AD4), et transfère le dépôt de liste (AD31) de l'adresse de portefeuille public (AD2) à l'adresse de portefeuille de vendeur (AD4) ;
une procédure de transfert d'exposition (B5) étant utilisée pour appeler la procédure de vérification de données d'exposition (B3) à la date de début pour obtenir les informations de vérification (B31), dans lequel, lorsque la procédure de transfert d'exposition détermine, selon les informations de vérification (B31), que les données d'exposition sont exposées à l'un des stands (111) correspondant au numéro de stand, la procédure de transfert d'exposition (B5) transfère un paiement d'avance d'exposition (AD21) de l'adresse de portefeuille public (AD2) à l'adresse de portefeuille d'opération (AD3) ; où, lorsque la procédure de transfert d'exposition (B5) détermine, en fonction des informations de vérification (B31), que les données d'exposition ne sont pas exposées à l'un des stands (111) correspondant au numéro de stand, la procédure de transfert d'exposition (B5) transfère les frais d'exposition (AD42) de l'adresse de portefeuille public (AD2) à l'adresse de portefeuille de vendeur (AD4), et transfère le dépôt d'inscription (AD31) de l'adresse de portefeuille public (AD2) à l'adresse de portefeuille de vendeur (AD4) ;
une procédure d'inspection aléatoire (B6) étant utilisée pour appeler aléatoirement la procédure de vérification des données d'exposition (B3) au moins une fois chaque jour entre la date de début et la date de fin pour obtenir les informations de vérification (B31), et pour stocker les informations de vérification (B31) en tant qu'informations de résultat d'inspection aléatoire (B61) ; et
une procédure de transfert de paiement de solde (B7) étant utilisée pour transférer, selon les informations de résultat d'inspection aléatoire (B61), un pourcentage prédéterminé d'un paiement de solde d'exposition (AD22) de l'adresse de portefeuille public (AD2) à l'adresse de portefeuille d'opération (AD3) après la date de fin, et pour fermer le contrat intelligent d'exposition (B) ; où le pourcentage prédéterminé est dans une plage de 0 % à 100 %, et une somme du paiement d'avance d'exposition (AD21) et du paiement de solde d'exposition (AD22) est égale aux frais d'exposition (AD42);
où, lorsque la procédure de transfert de paiement de solde (B7) détermine, selon les informations de résultat d'inspection aléatoire (B61), que les informations de vérification (B31) obtenues par la procédure d'inspection aléatoire (B6) indiquent à chaque fois que les données d'exposition sont exposées à l'un des stands (111) correspondant au numéro de stand, le pourcentage prédéterminé est de 100 % ;
où, lorsque la procédure de transfert de paiement de solde (B7) détermine, selon les informations de résultat de l'inspection aléatoire (B61), que les informations de vérification (B31) obtenues par la procédure d'inspection aléatoire (B6) indiquent à chaque fois que les données d'exposition ne sont pas exposées à l'un des stands (111) correspondant au numéro de stand, le pourcentage prédéterminé est de 0 %, et la procédure de transfert de paiement de solde (B7) transfère les frais d'exposition (AD42) de l'adresse de portefeuille public (AD2) à l'adresse de portefeuille de vendeur (AD4), et transfère le dépôt d'opération (AD32) de l'adresse de portefeuille public (AD2) à l'adresse de portefeuille de vendeur (AD4) .

2. Système de cyber-exposition commerciale basé sur le cloud (100) selon la revendication 1, dans lequel l'interface d'inscription (22) comprend une option de téléchargement de données de réalité virtuelle (221), et l'interface d'inscription (22) affiche un écran de stand de réalité virtuelle (224) qui correspond au numéro de stand dans une manière de réalité virtuelle lorsque l'option de téléchargement de données de réalité virtuelle (221) est sélectionnée ; dans lequel l'écran de stand de réalité virtuelle (224) comprend une pluralité de positions d'exposition (2241) et une pluralité d'options de position d'exposition (2242), chacune des positions d'exposition (2241) correspond à l'une des options de position d'exposition (2242), et n'importe laquelle des options de position d'exposition (2242) peut être sélectionnée pour permettre au vendeur d'exposition de télécharger un élément des données d'exposition ; dans lequel, lorsque l'une quelconque des options de position d'exposition (2242) est sélectionnée et que le vendeur d'exposition termine le téléchargement des données d'exposition, les données d'exposition téléchargées par le vendeur d'exposition sont présentées en temps réel à la position d'exposition (2241) qui correspond à l'option de position d'exposition sélectionnée (2242).

3. Système de cyber-exposition commerciale basé sur le cloud (100) selon la revendication 1, dans lequel le lieu d'exposition de réalité virtuelle (11) comprend en outre un espace scénique (11A), et l'espace scénique (11A) est utilisé pour présenter une publicité ; dans lequel l'interface d'inscription (22) comprend en outre une option de publicité, et l'interface d'inscription (22) est convertie en une interface de publicité (23) lorsque l'option de publicité est sélectionnée ; dans lequel l'interface de publicité (23) permet au vendeur d'exposition d'entrer au moins une date de publicité, au moins un temps de publicité, un compte de lecture de publicité, une longueur de publicité, un contenu de publicité et une position de publicité ; dans lequel l'interface de publicité (23) génère des frais de publicité (AD44) en fonction d'entrées du vendeur d'exposition et établit un contrat intelligent de publicité temporisé (C) ;
dans lequel le contrat intelligent de publicité temporisé (C) comprend :
une procédure de démarrage (C1), dans lequel, lorsque le contrat intelligent de publicité temporisé (C) est établi, la procédure de démarrage (C1) du contrat intelligent de publicité temporisé (C) transfère un dépôt de publicité (AD43) de l'adresse de portefeuille de vendeur (AD4) à l'adresse de portefeuille public (AD2) ;
des informations de publicité (C2) comprenant les données du vendeur, la date de la publicité, le temps de la publicité, le nombre de lectures de la publicité, la longueur de la publicité, le contenu de la publicité, la position de la publicité, les frais de publicité (AD44), l'adresse de portefeuille de vendeur (AD4), l'adresse de portefeuille public (AD2) et l'adresse de portefeuille d'opération (AD3) ;
une procédure de publicité (C3), dans lequel la procédure de publicité (C3) est configurée pour être appelée pour exposer le contenu de la publicité à la position de la publicité et au temps de la publicité à la date de la publicité pour une durée de la longueur de la publicité ;
une procédure de facturation (C4) étant utilisée pour transférer une partie des frais de publicité (AD44) de l'adresse de portefeuille de vendeur (AD4) à l'adresse de portefeuille public (AD2) après chaque exécution de la procédure de publicité (C3) ; dans lequel la procédure de facturation (C4) est appelée par la procédure de publicité (C3) chaque fois que le contenu de la publicité est présenté ; et
une procédure de transfert (C5) étant utilisée pour transférer les frais de publicité (AD44) de l'adresse de portefeuille public (AD2) à l'adresse de portefeuille d'opération (AD3) après que la procédure de facturation (C4) a été exécutée un nombre de fois équivalent au nombre de lectures de publicité ou a été appelée par la procédure de publicité (C3), et pour mettre fin au contrat intelligent de publicité temporisé (C) ;
dans lequel, lorsque la procédure de publicité (C3) est appelée et ne parvient pas à présenter le contenu de publicité à la position de publicité, la procédure de publicité (C3) n'appelle pas la procédure de facturation (C4) mais appelle la procédure de transfert (C5) ;
dans lequel, à chaque fois que la procédure de facturation (C4) est exécutée, en réponse à ladite une partie des frais de publicité (AD44) n'étant pas correctement transférée de l'adresse de portefeuille de vendeur (AD4) à l'adresse de portefeuille public (AD2), la procédure de facturation (C4) transfère le dépôt de publicité (AD43) de l'adresse de portefeuille public (AD2) à l'adresse de portefeuille d'opération (AD3) et appelle la procédure de transfert (C5).

4. Système de cyber-exposition commerciale basé sur le cloud (100) selon la revendication 3, dans lequel l'interface de publicité (23) comprend une option de téléchargement de contenu de publicité (231) et une option de diffusion en direct (232) ; dans lequel, lorsque l'option de diffusion en direct (232) est sélectionnée et que le contrat intelligent de publicité temporisé (C) est établi, la procédure de publicité (C3) active une fonction de connexion de diffusion en direct à la position de publicité à la date de publicité, et le vendeur d'exposition utilise l'application décentralisée de vendeur (2) pour effectuer la diffusion en direct à la position de publicité.

5. Système de cyber-exposition commerciale basé sur le cloud (100) selon la revendication 1, dans lequel le lieu d'exposition de réalité virtuelle (11) comprend en outre un espace scénique (11A), et l'espace scénique (11A) est utilisé pour présenter une publicité ; dans lequel l'interface d'inscription (22) comprend en outre une option de publicité, et l'interface d'inscription (22) est convertie en une interface de publicité (23) lorsque l'option de publicité est sélectionnée ; dans lequel l'interface de publicité (23) permet au vendeur d'exposition d'entrer un trafic prédéterminé, au moins une date de publicité, au moins un temps de publicité, un nombre de lectures de publicité, une longueur de publicité, un contenu de publicité et une position de publicité ; dans lequel l'interface de publicité (23) génère des frais de publicité (AD44) en fonction d'entrées du vendeur d'exposition et établit un contrat intelligent de publicité de trafic (D) ; dans lequel le contrat intelligent de publicité de trafic (D) comprend :
une procédure de démarrage (D1), dans lequel, lorsque le contrat intelligent de publicité de trafic (D) est établi, la procédure de démarrage (D1) du contrat intelligent de publicité de trafic (D) transfère un dépôt de publicité (AD43) de l'adresse de portefeuille de vendeur (AD4) à l'adresse de portefeuille public (AD2) ;
des informations de publicité (D2) comprenant le trafic prédéterminé, la position de la publicité, un temps prédéterminé, le contenu de la publicité, le nombre de lectures de la publicité, les frais de publicité (AD44), l'adresse de portefeuille de vendeur (AD4), l'adresse de portefeuille public (AD2) et l'adresse de portefeuille d'opération (AD3) ;
une procédure de facturation (D4) étant utilisée pour transférer une partie des frais de publicité (AD44) de l'adresse de portefeuille de vendeur (AD4) à l'adresse de portefeuille public (AD2) après chaque exécution de la procédure de publicité (D3) ;
une procédure de publicité (D3) étant utilisée pour présenter le contenu de publicité à la position de publicité pendant une durée du temps prédéterminé, dans lequel la procédure de facturation (D4) est appelée par la procédure de publicité (D3) à chaque fois après la présentation du contenu de publicité ;
une procédure de surveillance (D6) étant utilisée pour surveiller le trafic de navigation en temps réel du stand, dans lequel, lorsque le trafic de navigation en temps réel est inférieur au trafic prédéterminé et qu'un nombre de fois que la procédure de publicité (D3) est appelée n'est pas supérieur au nombre de lectures de la publicité, la procédure de surveillance (D6) appelle la procédure de publicité (D3) ; et
une procédure de transfert (D5) étant utilisée pour transférer les frais de publicité (AD44) de l'adresse de portefeuille public (AD2) à l'adresse de portefeuille d'opération (AD3) après que la procédure de facturation (D4) a été exécutée un nombre de fois équivalent au nombre de lectures de la publicité ou a été appelée par la procédure de publicité (D3), et pour mettre fin au contrat intelligent de publicité de trafic (D) ;
dans lequel, lorsque la procédure de publicité (D3) est appelée et ne parvient pas à présenter le contenu de publicité à la position de publicité, la procédure de publicité (D3) n'appelle pas la procédure de facturation (D4) mais appelle la procédure de transfert (D5) ;
dans lequel, à chaque fois que la procédure de facturation (D4) est exécutée, en réponse à ladite une partie des frais de publicité (AD44) n'étant pas correctement transférée de l'adresse de portefeuille de vendeur (AD4) à l'adresse de portefeuille public (AD2), la procédure de facturation (D4) transfère le dépôt de publicité (AD43) de l'adresse de portefeuille public (AD2) à l'adresse de portefeuille d'opération (AD3) et appelle la procédure de transfert (D5).

6. Système de cyber-exposition basé sur le cloud (100) selon la revendication 1, dans lequel l'application décentralisée visiteur (1) comprend en outre une interface de billetterie (12) qui affiche au moins une option de billetterie (121), et l'option de billetterie (121) correspond au lieu d'exposition de réalité virtuelle (11) actuellement affiché ; dans lequel, lorsque l'option de billetterie (121) est sélectionnée, l'interface de billetterie (12) demande à un visiteur de saisir une adresse de portefeuille de visiteur (AD1), de manière à établir un contrat intelligent de billetterie (A) ; dans lequel le contrat intelligent de billetterie (A) comprend :
des informations de billetterie (A1) comprenant des informations de lieu d'exposition virtuel, une date d'achat de billet, l'adresse de portefeuille de visiteur (AD1), des frais de billet, l'adresse de portefeuille public (AD2), et l'adresse de portefeuille d'opération ; dans lequel les informations de lieu d'exposition virtuel comprennent la date de début, la date de fin, et les données d'identification de lieu d'exposition ;
une procédure de facturation (A2), dans lequel, lorsque le contrat intelligent de billetterie (A) est établi, la procédure de facturation (A2) est exécutée et transfère les frais de billet de l'adresse de portefeuille de visiteur (AD1) à l'adresse de portefeuille public (AD2) ;
une procédure de transfert, dans lequel, lorsque le visiteur entre dans le lieu d'exposition de réalité virtuelle (11) qui correspond aux informations de lieu d'exposition virtuel dans les informations de billetterie, la procédure de transfert transfère les frais de billet (AD11) de l'adresse de portefeuille public (AD2) à l'adresse de portefeuille d'opération (AD3), et
une procédure de remboursement (A4) étant automatiquement exécutée à la date de fin pour déterminer si le visiteur entre ou non dans le lieu d'exposition de réalité virtuelle (11) avant la date de fin, dans lequel, lorsque la procédure de remboursement (A4) détermine que le visiteur n'entre pas dans le lieu d'exposition de réalité virtuelle (11) avant la date de fin, la procédure de remboursement (A4) transfère les frais de billet (AD11) de l'adresse de portefeuille public (AD2) à l'adresse de portefeuille de visiteur (AD1).

7. Système de cyber-exposition commerciale basé sur le cloud (100) selon la revendication 6, dans lequel l'interface de billetterie (12) exige en outre que le visiteur saisisse des informations de visiteur, et les informations de visiteur comprennent une nationalité, un sexe, un âge, un nom de société, un nom de visiteur, et des informations de contact ; dans lequel l'application décentralisée vendeur (2) comprend en outre une interface de gestion (24), et l'interface de gestion (24) affiche un plan d'étage de lieu d'exposition (241) et une pluralité de motifs de visiteur en temps réel (242) ; dans lequel le plan d'étage de lieu d'exposition (241) comprend une pluralité de motifs de stand (2411), chacun des motifs de stand (2411) représente l'un des stands (111) dans le lieu d'exposition de réalité virtuelle (11), et chacun des motifs de visiteur en temps réel (242) représente une position en temps réel du visiteur actuellement dans le lieu d'exposition de réalité virtuelle (11) ; dans lequel l'interface de gestion (24) comprend en outre une option de filtrage (2412), et l'option de filtrage (2412) est actionnée pour masquer sélectivement une partie des motifs de visiteur en temps réel (242) en fonction de la nationalité, du sexe ou de l'âge.

8. Système de cyber-exposition commerciale basé sur le cloud (100) selon la revendication 5, dans lequel le contrat intelligent de billetterie (A) comprend en outre une procédure d'enregistrement (A5) ; dans lequel, chaque fois que le visiteur entre dans le lieu d'exposition de réalité virtuelle (11), la procédure d'enregistrement (A5) enregistre un chemin de déplacement du visiteur et un temps de séjour du visiteur à chacun des stands (111) dans le lieu d'exposition de réalité virtuelle (11) jusqu'à ce que le visiteur quitte le lieu d'exposition de réalité virtuelle (11), et génère de manière correspondante des informations d'enregistrement (A51) ; dans lequel l'application décentralisée visiteur (1) comprend en outre une interface d'enregistrement de chemin (13) qui appelle la procédure d'enregistrement (A5) pour obtenir les informations d'enregistrement (A51) ; dans lequel l'application décentralisée visiteur (1) affiche un parcours de navigation (113) du visiteur dans le lieu d'exposition de réalité virtuelle (11) et le temps de séjour à chacun des stands parcourus (111) sur la base des informations d'enregistrement (A51).

9. Système de cyber-exposition commerciale basé sur le cloud (100) selon la revendication 8, dans lequel, lorsque le visiteur se connecte au lieu d'exposition de réalité virtuelle (11) pour une deuxième fois ou plusieurs fois, les stands (111) qui sont parcourus sont marqués dans le lieu d'exposition de réalité virtuelle (11) en fonction des informations d'enregistrement.

10. Système de cyber-exposition commerciale basé sur le cloud (100) selon la revendication 1, dans lequel l'application décentralisée visiteur (1) comprend en outre une interface de commande (14) ; dans lequel le lieu d'exposition de réalité virtuelle (11) affiché par l'application décentralisée visiteur (1) présente au moins une option de commande (114) à chacun des stands (111), et l'interface de commande correspondante (14) est présentée lorsque l'option de commande (114) est sélectionnée ; dans lequel l'interface de commande (14) permet à un visiteur de saisir des informations de saisie de commande, et les informations de saisie de commande comprennent un article de commande, une quantité de commande, une adresse de livraison, des informations de logistique, des informations de visiteur et une adresse de portefeuille de visiteur (AD1), de manière à établir un contrat intelligent de commande (E) ; dans lequel le contrat intelligent de commande (E) comprend :
des informations de commande (E1) comprenant les informations de saisie de commande, au moins un prix d'article de commande, le numéro de stand et un numéro de vendeur d'exposition ;
une procédure de création de commande (E2), dans lequel, lorsque le contrat intelligent de commande (E) est créé, la procédure de création de commande (E2) transfère un acompte de commande (AD12) de l'adresse de portefeuille de visiteur (AD1) à l'adresse de portefeuille public (AD2), et génère un premier code aléatoire (E21), un deuxième code aléatoire (E22), et un troisième code aléatoire (E23) ; dans lequel la procédure de création de commande (E2) transmet en outre les informations de commande (E1), le premier code aléatoire (E21), et un numéro de commande (E24) à l'application décentralisée vendeur (2), transmet le numéro de commande (E24) et le deuxième code aléatoire (E22) à une application décentralisée opérateur de logistique (4), et transmet le troisième code aléatoire (E23) et le numéro de commande (E24) à l'application décentralisée visiteur (1) ;
une procédure de génération de premier code-barres (E3), dans lequel la procédure de génération de premier code-barres (E3) est configurée pour être appelée par l'application décentralisée vendeur (2) et pour vérifier si les informations de production (25) transmises par l'application décentralisée vendeur (2) comprennent ou non le premier code aléatoire (E21), une vidéo d'emballage (251) et un numéro de production (252) ; dans lequel, en réponse aux informations de production (25) comprenant le premier code aléatoire (E21), la vidéo d'emballage (251) et le numéro de production (252), la procédure de génération de premier code-barres (E3) génère et transmet un premier code-barres (E31) à l'application décentralisée vendeur (2), et transfère un paiement de commande (AD13) de l'adresse de portefeuille de visiteur (AD1) à l'adresse de portefeuille public (AD2) ; dans lequel le premier code-barres (E31) comprend le premier code aléatoire (E21) et le numéro de commande (E24) ;
une procédure de génération de deuxième code-barres (E4), dans lequel la procédure de génération de deuxième code-barres (E4) est configurée pour être appelée par l'application décentralisée opérateur de logistique (4) et pour vérifier si les informations de vérification d'opérateur de logistique (41) transmises par l'application décentralisée opérateur de logistique (4) comprennent ou non le deuxième code aléatoire (E22) et le premier code-barres (E31) ; dans lequel, en réponse aux informations de vérification d'opérateur de logistique (41) comprenant le deuxième code aléatoire (E22) et le premier code-barres (E31), la procédure de génération (E4) de deuxième code-barres (E41) génère et transmet un deuxième code-barres (E41) à l'application décentralisée vendeur (2) ; dans lequel le deuxième code-barres (E41) comprend le deuxième code aléatoire (E22) et le numéro de commande (E24) ; et
une procédure de vérification de code-barres (E5), dans lequel la procédure de vérification du code-barres (E5) est configurée pour être appelée par l'application décentralisée visiteur (1) et pour vérifier si les informations de vérification de visiteur (15) transmises par l'application décentralisée visiteur (1) comprennent ou non le premier code aléatoire (E21), le deuxième code aléatoire (E22) et le troisième code aléatoire (E23) ; dans lequel, en réponse aux informations de vérification de visiteur (15) comprenant le premier code aléatoire (E21), le deuxième code aléatoire (E22), et le troisième code aléatoire (E23), la procédure de vérification de code-barres (E5) transfère des frais de vendeur d'exposition (AD23) de l'adresse de portefeuille public (AD2) à l'adresse de portefeuille de vendeur (AD4), et transfère des frais de logistique (AD24) de l'adresse de portefeuille public (AD2) à une adresse de portefeuille d'opérateur de logistique (AD5).

11. Système de cyber-exposition commerciale basé sur le cloud (100) selon la revendication 10, dans lequel, lorsque l'application décentralisée vendeur (2) reçoit les informations de commande (E1), une interface de gestion de vendeur (26) de l'application décentralisée de vendeur (2) génère de manière correspondante une option de génération de code-barres de vendeur (261) ; dans lequel, après la sélection de l'option de génération de code-barres de vendeur (261), l'interface de gestion de vendeur (26) demande à un vendeur de lire le numéro de production (252) et de télécharger la vidéo d'emballage (251) ; dans lequel l'interface de gestion de vendeur (26) intègre le numéro de production (252), la vidéo d'emballage (251) et le deuxième code aléatoire (E22) dans les informations de production (25) ; dans lequel le numéro de production (252) comprend le numéro de commande, un code d'appareil de production et un temps de production.

12. Système de cyber-exposition commerciale basé sur le cloud (100) selon la revendication 10, comprenant en outre l'application décentralisée opérateur de logistique (4) ; dans lequel, lorsque la procédure de génération de premier code-barres (E3) génère le premier code-barres (E31), la procédure de génération de premier code-barres (E3) transmet également le premier code-barres (E31) à l'application décentralisée opérateur de logistique (4) ; dans lequel, lorsque l'application décentralisée opérateur de logistique (4) reçoit le premier code-barres (E31), une interface de gestion de logistique (42) de l'application décentralisée opérateur de logistique (4) génère de manière correspondante une option de génération de code-barres de logistique (421) ; dans lequel, après que l'option de génération de code-barres de logistique (421) est sélectionnée, l'interface de gestion de logistique (42) demande à un opérateur de logistique de balayer un code-barres sur une boîte d'emballage de produit reçue par l'opérateur de logistique, de manière à obtenir des informations de balayage ; dans lequel, après que l'interface de gestion de logistique (42) obtient les informations de balayage, l'interface de gestion de logistique (42) vérifie si les informations de balayage incluent ou non le premier code-barres (E31) ; dans lequel, en réponse aux informations de balayage comprenant le premier code-barres (E31), les informations de balayage et le deuxième code aléatoire (E22) sont intégrés dans les informations de vérification d'opérateur de logistique (41) pour être transmis à la procédure de génération de deuxième code-barres (E4) ; dans lequel, en réponse aux informations de balayage ne comprenant pas le premier code-barres (E31), les informations de vérification d'opérateur de logistique (41) ne sont pas générées.

13. Système de cyber-exposition commerciale basé sur le cloud (100) selon la revendication 12, dans lequel, lorsque la procédure de génération de premier code-barres (E3) génère le premier code-barres (E31), la procédure de génération de premier code-barres (E3) transmet également le premier code-barres (E31) à l'application décentralisée visiteur (1) ; dans lequel, lorsque la procédure de génération de deuxième code-barres (E4) génère le deuxième code-barres (E41), la procédure de génération de deuxième code-barres (E4) transmet également le deuxième code-barres (E41) à l'application décentralisée visiteur (1) ; dans lequel, lorsque l'application décentralisée visiteur (1) reçoit le deuxième code-barres (E41), une interface de gestion de visiteur (16) de l'application décentralisée visiteur (1) génère de manière correspondante une option de réception de marchandise (161) ; dans lequel, lorsque l'option de réception de marchandise (161) est sélectionnée, l'interface de gestion de visiteur (16) demande au visiteur de balayer deux codes-barres sur une boîte d'emballage de produit reçue par le visiteur, de manière à obtenir deux éléments d'information de balayage de réception de marchandise ; dans lequel, après que l'interface de gestion de visiteur (16) a lu les deux éléments d'information de balayage de réception de marchandise, l'interface de gestion de visiteur (16) vérifie si les deux éléments d'information de balayage de réception de marchandise comprennent chacun le premier code aléatoire (E21) et le deuxième code aléatoire (E22) ; dans lequel, en réponse aux deux éléments d'information de balayage de réception de marchandise comprenant chacun le premier code aléatoire (E21) et le deuxième code aléatoire (E22), l'interface de gestion de visiteur (16) intègre les deux éléments d'information de balayage de réception de marchandise et le troisième code aléatoire (E23) dans les informations de vérification de visiteur (15) pour être transmis à la procédure de vérification de code-barres (E5), et l'interface de gestion de visiteur (16) affiche des informations indiquant un résultat correct ; dans lequel, en réponse aux deux éléments d'information de balayage de réception de marchandise ne comprenant pas chacun le premier code aléatoire (E21) et le deuxième code aléatoire (E22), les informations de vérification de visiteur (15) ne sont pas générées, et l'interface de gestion de visiteur (16) affiche des informations indiquant un résultat incorrect.

14. Système de cyber-exposition commerciale basé sur le cloud (100) selon la revendication 13, dans lequel la procédure de création de commande (E2) transfère en outre un dépôt de commande (AD45) de l'adresse de portefeuille de vendeur (AD4) à l'adresse de portefeuille public (AD2), l'interface de commande affiche en outre une date de remboursement, et le contrat intelligent de commande (E) comprend en outre une procédure de remboursement ; dans lequel, à la date de remboursement, la procédure de remboursement détermine si la procédure de génération de premier code-barres (E3) est exécutée ou non ; dans lequel, en réponse à la procédure de génération de premier code-barres (E3) étant déterminée comme n'étant pas exécutée, la procédure de remboursement transfère l'acompte de commande (AD12), le paiement de commande (AD13), et le dépôt de commande (AD45) de l'adresse de portefeuille de public (AD2) à l'adresse de portefeuille de visiteur (AD1).

15. Système de cyber-exposition commerciale basé sur le cloud (100) selon la revendication 14, dans lequel le contrat intelligent de commande (E) comprend en outre une procédure de vérification de marchandise (E6), la procédure de vérification de marchandise (E6) est configurée pour être appelée par l'application décentralisée visiteur (1) pour vérifier si les informations de balayage de numéro de production transmises par l'application décentralisée visiteur (1) comprennent ou non le numéro de production (252) ; dans lequel, en réponse aux informations de balayage de numéro de production comprenant le numéro de production (252), la procédure de vérification de marchandise (E6) effectue une opération d'enregistrement de garantie de marchandise, et la procédure de vérification de marchandise (E6) transfère le dépôt de commande (AD45) de l'adresse de portefeuille public (AD2) à l'adresse de portefeuille de vendeur (AD4) ; dans lequel, en réponse aux informations de balayage de numéro de production ne comprenant pas le numéro de production (252), la procédure de vérification de marchandise (E6) envoie une notification à l'application décentralisée visiteur (1), et la procédure de vérification de marchandise (E6) transfère le dépôt de commande (AD45) de l'adresse de portefeuille public (AD2) à l'adresse de portefeuille de visiteur (AD1).
